# EUROPEAN PATENT SPECIFICATION

(11) **EP 4 646 901 B1**
(45) Date of publication and mention of the grant of the patent: **13.05.2026**
(21) Application number: 24840926.0
(22) Date of filing: 19.12.2024
(51) Int. Cl.: H04W 88/08, H04L 1/00, H04W 24/10, H04W 36/00, H04B 7/06

(54) **SIGNAL-TO-INTERFERENCE-PLUS-NOISE RATIO REPORT FOR OPEN RADIO ACCESS NETWORK OPEN FRONTHAUL INTERFACE**
BERICHT ÜBER DAS SIGNAL-ZU-INTERFERENZ-PLUS-RAUSCH-VERHÄLTNIS FÜR OFFENE FRONTHAUL-SCHNITTSTELLE EINES FUNKZUGANGSNETZWERKS
RAPPORT SUR LE RAPPORT SIGNAL SUR INTERFÉRENCE PLUS BRUIT POUR INTERFACE FRONTHAUL OUVERTE DE RÉSEAU D'ACCÈS RADIO OUVERT

(30) Priority: 29.01.2024 US 202463626449 P
(43) Date of publication of application: 12.11.2025
(73) Proprietor: Telefonaktiebolaget LM Ericsson (publ), 164 83 Stockholm (SE)
(72) Inventor: LU, Chenguang, 164 80 Stockholm (SE); HUSS, Fredrik, 164 80 Stockholm (SE); TESSIER, Stéphane, 164 80 Stockholm (SE); VDOVIN, Lev, 164 80 Stockholm (SE); HENNERT, Lars, 164 80 Stockholm (SE); KARLSSON, Jonas, 164 80 Stockholm (SE); BERG, Miguel, 164 80 Stockholm (SE); POHLMAN, Björn, 164 80 Stockholm (SE); SUN, Louise, 164 80 Stockholm (SE); HUANG, Yezi, 164 80 Stockholm (SE)
(74) Representative: Ericsson
(86) International application number: PCT/SE2024/051114
(87) International publication number: WO 2025/165274

(56) References cited:
- WO-A1-2023/152180
- WO-A1-2025/036893
- US-A1- 2023 086 667
- US-A1- 2023 155 864
- NOKIA GERMANY: "Draft - RTS/MSG-001142 v0.0.2 (TS 103 859 ) O-RAN-WG4-.CUS.0-v12.00", vol. TC MSG Mobile Standards Group, no. .0.2, 15 January 2024 (2024-01-15), pages 1 - 385, XP014479942, Retrieved from the Internet <URL:ftp://docbox.etsi.org/MSG/MSG/05-CONTRIBUTIONS/2024/MSG(24)000003_Draft_-_RTS_MSG-001142__v0_0_2__TS_103_859____O-RAN-WG4-_CUS.zip MSG-001142v1200_002.docx> [retrieved on 20240115]

## Description

### TECHNICAL FIELD

The present disclosure is related to wireless communication systems and more particularly to efficient and flexible signal-to-interference-plus-noise ratio ("SINR") report for open radio access network ("O-RAN") open fronthaul interface.

### BACKGROUND

The present disclosure is related to wireless communication systems and more particularly to efficient and flexible signal-to-interference-plus-noise ratio ("SINR") report for open radio access network ("O-RAN") open fronthaul interface.

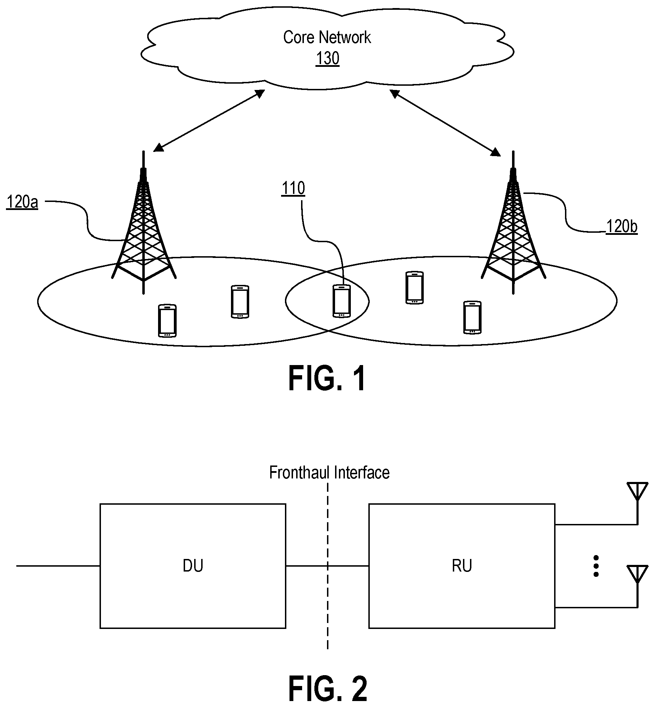

FIG. 1 illustrates an example of a new radio ("NR") network (e.g., a 5th Generation ("5G") network) including a 5G core ("5GC") network 130, network nodes 120a-b (e.g., 5G base station ("gNB")), multiple communication devices 110 (also referred to as user equipment ("UE")).

Massive multiple-input-multiple-output ("MIMO") techniques have been first adopted to practice in long term evolution ("LTE"). In 5G, it becomes a key technology component, which can be deployed in a much larger scale than in LTE. It features a large number of antennas used on the base-station side, where the number of antennas is typically much larger than the number of user-layers, for example, 64 antennas serving 8 or 16 user-layers in frequency range 1 ("FR1"), which includes sub-6 GHz frequency bands, and 256/512 antennas serving 2 or 4 layers in frequency range 2 ("FR2"), which includes frequency bands from 24.25 GHz to 52.6 GHz.

A user layer can be used herein to refer to an independent downlink or uplink data stream intended for one user. One user or UE may have one or multiple user layers. A user layer can also be referred to as a layer in the 3^{rd} generation partnership project ("3GPP") terminology. Massive MIMO can also be referred to as massive beamforming, which is able to form narrow beams focusing on different directions to counteract against the increased path loss at higher frequency bands. It also benefits multi-user MIMO which allows for transmissions from/to multiple users simultaneously over separate spatial channels resolved by the massive MIMO technologies, while keeping high capacity for each user. Therefore, it can significantly increase the spectrum efficiency and cell capacity.

At the base-station side, the interface between the distributed unit ("DU") and the radio unit (RU) is the fronthaul interface, as shown in FIG. 2. The great benefits of massive MIMO at the air-interface also introduce new challenges at the base-station side. The legacy common public radio interface ("CPRI")-type fronthaul transports time-domain in-phase and quadrature ("IQ") samples per antenna branch. As the number of antennas scales up in massive MIMO systems, the required fronthaul capacity also increases proportionally, which significantly drives up the fronthaul costs. To address this challenge, the fronthaul interface evolves from CPRI to enhance CPRI ("eCPRI"), a packet-based fronthaul interface. In eCPRI, other functional split options between a distributed unit ("DU") and a radio unit ("RU") are supported, referred to as different lower-layer split ("LLS") options. In the eCPRI standard specification, the terms eCPRI Radio Equipment Control ("eREC") and (eCPRI Radio Equipment ("eRE") are used instead of DU and RU. The basic idea is to move the frequency-domain beamforming function from DU to RU so that frequency samples or data of user-layers are transported over the fronthaul interface. Note that the frequency-domain beamforming is sometimes also referred to as precoding in the downlink ("DL") direction and equalizing or pre-equalizing in uplink ("UL") direction. By doing this, the required fronthaul capacity and thereby the fronthaul costs are significantly reduced, as the number of user layers is typically much fewer than the number of antennas in massive MIMO. In open radio access network ("O-RAN"), DU is referred to as O-DU while RU is referred to as O-RU.
WO 2023/152180 A1 discloses transmitting post-equalization SNIR values from O-RU to O-DU where SNIR is per time and frequency unit over a PUSCH allocation for each layer and user. Time resolution may be configured, i.e. that SNIR is averaged over a configured number of OFDM symbols.
US 2023/155864 A1 discloses various O-RAN functional splits, among these an UL functional split with O-RU Cat C2 wherein the O-RU performs the "DM-RS based Channel Estimation" and "Equalization" in the UL, and the O-DU performs demodulation.
ETSI Draft; MSG(24)000003, "ETSI TS 103 859 V12.0.0 (2024-01)", "Publicly Available Specification (PAS); O-RAN Fronthaul Control, User and Synchronization Plane Specification v12.00; (O-RAN.WG4.CUS.0-R003-v12.00)", *European Telecommunications Standards Institute (ETSI), 650, route des Lucioles ; F-06921 Sophia-Antipolis ; France* discloses O-RAN functional split options and fronthaul section types.

### SUMMARY

The invention is set out in the claims.

A first aspect of the invention comprises a method of operating a network node in a communications network as set forth in claim 1. The network node is configured to provide a radio unit ("RU"). The method includes determining a symbol pattern that the RU is capable of using to transmit a signal-to-interference-plus-noise ("SINR") report to a distributed unit ("DU"). The method further includes transmitting an indication to the DU of the symbol pattern that the RU is capable of using to transmit the SINR report to the DU. The method further includes transmitting the SINR report to the DU using the symbol pattern.

A second aspect of the invention comprises a method of operating a network node in a communications network as set forth in claim 9.

The network node is configured to provide a distributed unit ("DU"). The method includes receiving an indication from a radio unit ("RU") of a symbol pattern that the RU is capable of using to transmit a signal-to-interference-plus-noise ("SINR") report to the DU. The method further includes receiving the SINR report from the RU using the symbol pattern.

A third aspect of the invention comprises a network entity (e.g., a O-RAN distributed unit ("O-DU"), an O-RAN radio unit ("O-RU) as set forth in claim 18.

A fourth aspect of the invention comprises a computer program as set forth in claim 19.

Some preferred embodiments are defined in the dependent claims.

Certain embodiments may provide one or more of the following technical advantages. In some embodiments, support is provided for any symbol pattern and any value of SINR report per slot efficiently, avoiding repetitions of the reports. The O-DU can know how many SINR reports to be used from C-plane message or M-plane configuration. The O-DU can allocate properly the resources to process SINR values and the related processing, without the need to overbook the resources.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
FIG. 1 is a schematic diagram illustrating an example of a 5^{th} generation ("5G") network;
FIG. 2 is a block diagram illustrating an example of a fronthaul interface between a radio unit ("RU") and a distributed unit ("DU");
FIG. 3 is a block diagram illustrating an example of a weight based dynamic beamforming ("WDBF") implementation;
FIG. 4 is a signal flow diagram illustrating an example of an UL control-plane ("C-plane") and user-plane ("U-plane");
FIG. 5 is a block diagram illustrating an example of a demodulation reference signal beamforming with equalization ("DMRS-BF-EQ") implementation;
FIG. 6 is a signal flow diagram illustrating an example of an UL control-plane ("C-plane") and user-plane ("U-plane") for a DMRS-BF-EQ implementation;
FIG. 7 is a table illustrating an example of a proposal of C-plane Section Type 9 ("ST9") for SINR reports;
FIG. 8 is a table illustrating an example of a C-plane ST9 for SINR reports with a "symbolMask" field in accordance with some embodiments;
FIGS. 9 and 10A-C are schematic diagrams illustrating examples of symbol masks in accordance with some embodiments;
FIG. 11 is a table illustrating an example of a C-plane ST9 for SINR reports with a "numSymbol" field in accordance with some embodiments;
FIGS. 12-14 are flow charts illustrating examples of operations performed by a network node configured to provide a RU in accordance with some embodiments;
FIGS. 15-17 are flow charts illustrating examples of operations performed by a network node configured to provide a DU in accordance with some embodiments;
Fig. 18 is a block diagram of a communication system in accordance with some embodiments;
FIG. 19 is a block diagram of a user equipment in accordance with some embodiments
FIG. 20 is a block diagram of a network node in accordance with some embodiments;
FIG. 21 is a block diagram of a host computer communicating with a user equipment in accordance with some embodiments;
FIG. 22 is a block diagram of a virtualization environment in accordance with some embodiments; and
FIG. 23 is a block diagram of a host computer communicating via a base station with a user equipment over a partially wireless connection in accordance with some embodiments.

### DETAILED DESCRIPTION

Herein the term user layer can refer to an independent downlink ("DL") or uplink ("UL") data stream intended for one user. One user or communication devices (also referred to herein as a user equipment ("UE")) may have one or multiple user layers. Massive MIMO can also be referred to as massive beamforming, which is able to form narrow beams focusing on different directions to counteract against the increased path loss at higher frequency bands. It also benefits multi-user MIMO which allows for transmissions from/to multiple users simultaneously over separate spatial channels resolved by the massive MIMO technologies, while keeping high capacity for each user. Therefore, it can significantly increase the spectrum efficiency and cell capacity.

At the base-station side, the interface between the baseband unit ("BBU") and the radio unit ("RU") is the fronthaul interface, whereas the interface between the BBU and the core network ("CN") is the backhaul interface. The great benefits of massive MIMO at the air-interface also introduce new challenges at the base-station side. The legacy common public radio interface ("CPRI")-type fronthaul transports time-domain quadrature ("IQ") samples per antenna branch. As the number of antennas scales up in massive MIMO systems, the required fronthaul capacity also increases proportionally, which significantly drives up the fronthaul costs. To address this challenge, the fronthaul interface evolves from CPRI to enhanced CPRI ("eCPRI"), a packet-based fronthaul interface. In eCPRI, other functional split options between a BBU and a RU are supported, referred to as different lower-layer split ("LLS") options. The basic idea is to move the frequency-domain beamforming function from BBU to RU so that frequency samples or data of user-layers are transported over the fronthaul interface. Note that the frequency-domain beamforming is sometimes also referred to as precoding in the DL direction and equalizing or pre-equalizing in UL direction. By doing this, the required fronthaul capacity and thereby the fronthaul costs can be significantly reduced, as the number of user layers is typically much fewer than the number of antennas in massive MIMO.

The term radio unit ("RU") can be used herein to refer to a network node (or a portion of a network node) that performs radio functions including a portion of physical layer ("PHY") functions according to an LLS option. The RU can perform conversions between radio frequency ("RF") signals and baseband signals. On the network side a RU can transmit and receive the frequency-domain IQ data (modulated user data) or unmodulated user data to and from BBU through a fronthaul interface (e.g. eCPRI). The RU can also transmit and receive the RF signals to and from UEs through its antennas.

The term baseband unit ("BBU") can be used herein to refer to a network entity (e.g., a network node or a portion of a network node) that performs baseband processing. The BBU can communicatively couple to the CN via a backhaul interface or to a central unit ("CU") via an F1 interface.

In an open radio access network ("O-RAN") the BBU and RU can be referred to as O-DU and O-RU, respectively. In D-MIMO terminology, the RU can also be referred to as an access point ("AP") and the BBU can be referred to as a central processing unit ("CPU") or edge cloud processor. In some terminologies, the RU can also be referred to as remote radio unit ("RRU") and the BBU can be referred to as a digital unit or distributed unit ("DU"). In eCPRI terminologies, the BBU and the RU are referred to as an eCPRI radio equipment control ("eREC") and eCPRI radio equipment ("eRE") respectively. In another terminology, a BBU and a RU may be referred to as a LLS-CU and a LLS-DU respectively. The BBU and its equivalence can also be softwarized or virtualized as Baseband Processing Function in a Cloud environment. Use of the terms BBU and RU herein are not intended to limit the application of the innovation, which can be used in any suitable wireless field.

The term desired cell/channel can be used herein to refer to the cell/channel which connects to the UEs of the K user-layers.

The term user-plane data can be used herein to mean, for example, frequency-domain user-layer data sent over fronthaul.

The term channel information can be used herein to mean, for example, information about channel properties carried by the channel values. The term channel value/data can also be used here to refer to, for example, one or a set of complex values representing the amplitude and phase of the channel coefficients in frequency domain. The channel values are related to the frequency response of the wireless channel.

The term beam can be used herein to refer to a directional beam formed by multiplying a signal with different weights, in frequency-domain, at multiple antennas such that the energy of the wanted signal is concentrated to a certain direction and/or the energy of the interreference signal is nulled at a certain direction.

As an example, FIG. 2 shows the block diagram of an O-RAN LLS option in the DL direction for Cat-B radio. The PHY functional blocks above O-RAN FH is hosted by an O-DU, whereas the PHY functional blocks below O-RAN FH is hosted by an O-RU. In O-RAN, the frequency-domain beamforming is referred to as "precoding and beamforming" as shown in FIG. 2, which may be referred to herein as frequency-domain beamforming or beamforming.

The term beamforming can be used herein to refer to a technique which multiplies a signal with different weights (in frequency-domain) at multiple antennas, which enables the signal energy to be sent in space with a desired beam pattern by forming a directional beam concentrating on certain direction or forming nulling in certain direction, or a combination of both.

The term beamforming weight ("BFW") can be used herein to refer to a set of one or more complex weights, each set is multiplied with a signal of one user-layer at a subcarrier or a group of subcarriers. The weighted signals of different user layers towards the same antenna or transmit beam are combined linearly. As a result, different user-layer signals are beamformed to different directions. The wording beamforming performance when used herein may mean signal quality in DL at the UE side after the beamforming has been performed at the base-station side, measured by, for example, post-processing signal-to-interference-and-noise-power ratio ("SINR") at a UE, resulted user throughput, bit rate, etc.

The term antenna array can be used herein to refer to a set of multiple antennas which are used collectively to transmit and/or receive signal. In some examples, an antenna array is one antenna panel on which multiple antennas are placed. In additional examples, among these multiple antennas, more than one antennas are connected together and used as one antenna, which is connected to one radio frequency ("RF") component (e.g., a power amplifier or a low-noise amplifier). These connected antennas can be referred to as a subarray. From a baseband processing perspective, one subarray can act as one antenna. In this example, an antenna array is composed of multiple subarrays, each of which is composed of multiple antennas. In general, the size of a subarray is 1 when each subarray is composed of only one antenna. In some other terminologies, antennas in an antenna array are referred to as antenna elements. In O-RAN terminology, subarray can be referred to as array element and an antenna array can be referred to as an antenna. In O-RAN terminology, each antenna can include multiple array elements.

The term antenna ports can be used herein to refer to subarrays of an antenna array. When a subarray size is 1, each antenna port can correspond to each antenna. In O-RAN terminology, an antenna port can refer to an array element. In some examples, an antenna port is also referred to as a digital antenna port, where each digital antenna port corresponds to one antenna seen from baseband processing. In downlink, the output signals of beamforming in the frequency domain can be sent to the corresponding antenna ports.

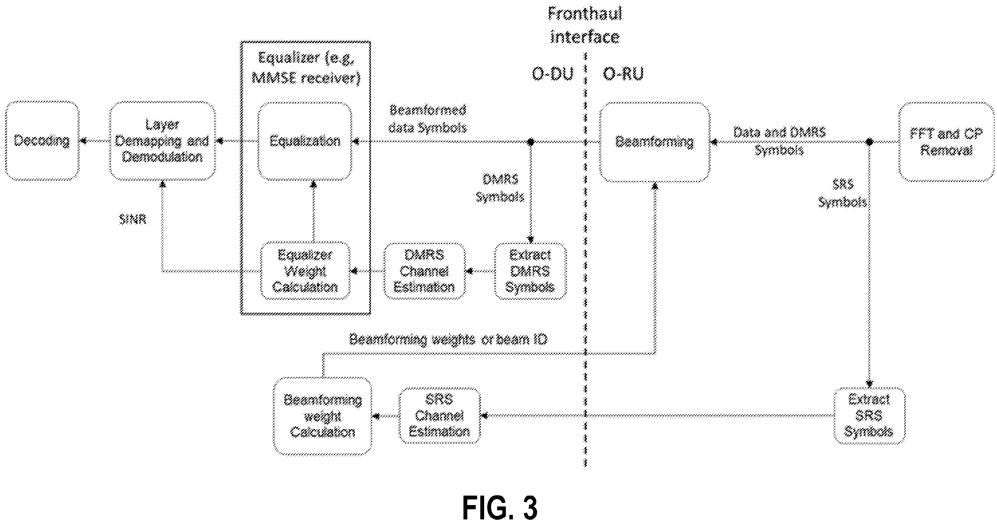

Various embodiments herein focuses on the uplink ("UL") direction of the fronthaul interface. FIG. 3 illustrates an example of the UL Weight-based Dynamic Beamforming ("WDBF") implementation supported by the current O-RAN WG4 specification. By having the beamforming function in the O-RU, the number of streams going through the fronthaul interface becomes smaller than the number of antenna branches. However, the beamforming weights are calculated in the O-DU based on the sounding reference signal ("SRS") sent back from the O-RU. Since the SRS channel estimates correspond to an earlier channel, the required number of streams is still much larger than the number of layers to avoid performance loss, compared to that using CPRI-based fronthaul. There is a tradeoff between the number of streams used and the performance.

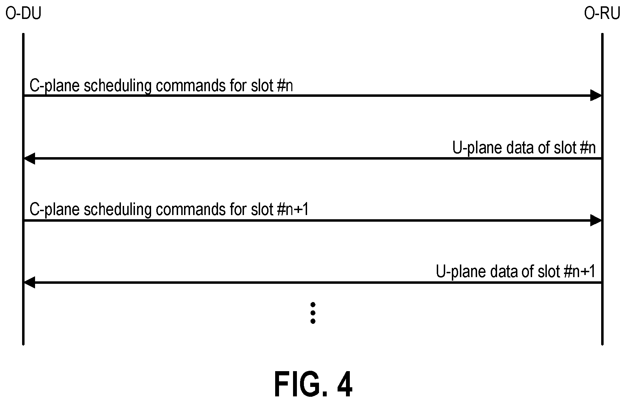

FIG. 4 illustrates an example of the control-plane ("C-plane") and user-plane ("U-plane") data flow for WDBF. For every slot, the O-DU sends first C-plane messages to convey the scheduling information to the O-RU. The scheduling information includes the resource elements ("REs") to be scheduled, the beam identifier ("ID") (referred to herein as beamId) which represents the beamforming weights pre-stored in the O-RU, the beamforming weights ("BFWs") to be used. The O-RU receives the scheduling information and then processes the scheduled REs according to the scheduling information received, e.g., perform beamforming (i.e., apply the beamforming weights received directly or indicated by the beam ID received) for the scheduled REs. Then the O-RU sends the processed REs (i.e., U-plane data) in U-plane messages to the O-DU.

There is another type of beamforming procedure defined in the current O-RAN WG4 specification, referred as Channel Information based Beamforming ("CIBF"). In CIBF, instead of transferring BFWs or beamId, the O-DU transfers to the O-RU the scheduled layers and the SRS channel estimates of the scheduled layers in the C-plane messages. The O-RU uses the received information (i.e., the scheduled REs, the scheduled layers and their channel estimates for the scheduled REs) to calculate the BFWs and perform beamforming to the scheduled REs using the calculated BFWs. Then the O-RU sends the processed REs (i.e., U-plane data) in U-plane messages to the O-DU. In the specification, each scheduled layer is conveyed by a field called "ueId" in C-plane message. Although the field name is "ueId", the ueId represents a layer, not a UE. For a UE with multiple layers scheduled, it needs multiple ueId(s) where each ueId represent one layer of the UE.

In the current O-RAN WG4 open-fronthaul CUS specification, O-RAN CU plane (control plane and user plane) distinguishes logical data flows on transport level, based on the eAxC ID presented in the eCPRI transport header of the C- and U-plane message. It allows to distinguish RU's logical flows, representing spatial streams (e.g. beamformed data stream), in some cases, data layers. In this invention, we focus on the uplink (UL) direction and the case where each eAxC ID represents a data layer, which is also referred to as layer, user layer, or MIMO layer. A data layer represents an independent data stream from a UE to base station in UL and from base station to a UE in DL.

In the current O-RAN WG4 open-fronthaul CUS specification, a C- or U-plane message is usually related to one eAxC ID value on transport level, presented in the eCPRI transport header. It also supports the possibility to use one C plane message to represent multiple layers, when multiple layers share the same C-plane information. For example, the multiple layers are scheduled on the same resource elements (REs). It is more efficient to use one C-plane message to send the RE information one time for all associated layers, instead of repeating the same RE information using multiple C-plane messages sent multiple times. In this invention, this method is referred to as layer grouping for C plane messaging. Layer grouping is useful for multi-layer transmission in single-user MIMO (referred to as SU-MIMO, where multiple layers are from the same UE) and multi-user MIMO (referred to as MU-MIMO, where multiple layers are from multiple UEs), where multiple layers are scheduled on the same REs.

In the current O-RAN WG4 open-fronthaul CUS specification, layer grouping is supported by introducing a new type of eAxC ID referred to as representative eAxC ID in M-plane (management plane). A representative eAxC ID is defined to represent a list of eAxC IDs (i.e., multiple eAxC IDs) which are referred to as the member eAxC ID of the list of eAxC IDs. The representative eAxC ID and its member eAxC IDs are defined by O-DU via M-plane. In this way, one C-plane message can refer to a representative eAxC ID to carry the scheduling information (e.g., RE information) for itself and all its member eAxC IDs. In addition to the common scheduling information of all layers (associated to the representative eAxC ID and the member eAxC IDs) in one C-plane message, Section Extension 10 (SE10) can be used to convey ueId per layer, beamId per layer, or beamforming weights per layer, which are layer specific. In the O-RAN WG4 open-fronthaul CUS specification, the representative eAxC ID in UL is denoted as representative-rx-eaxc-id in M-plane. The member eAxC ID in UL is denoted as member-rx-eaxc-id in M-plane.

In O-RAN open fronthaul, a C or U plane message contains an eCPRI transport header, in which the "ecpriRtcid / ecpriPcid" field represents the eAxC ID used. A C or U plane message further contains one or more sections using a specific Section Type. Multiple Section Types are defined to carry different type of scheduling information for different purposes. For example, Section Type 0 ("ST0") is used to represent unused resource blocks or symbols. Section Type 1 (ST1) is used to represent used (scheduled) REs for most DL/UL channels (e.g., Physical Uplink Shared Channel ("PUSCH"), Physical Downlink Shared Channel ("PDSCH")) when WDBF is used. Each section can be attached with one or more Section Extensions. Each Section Extension attached includes additional information than that described by the section. For example, Section Extension 1 ("SE1") is used to provide beamforming weights. Section Extension 4 ("SE4") is used to provide modulation compression parameters. Section Extension 5 is used to provide Section Extension 10 ("SE10") is used to provide beamforming weights or ueIds when port (or layer) grouping is used.

O-RAN WG4 has agreed to improve the current specification by introducing a new beamforming method referred to as demodulation reference signal based beamforming ("DMRS-BF") to achieve the best performance using the minimum fronthaul bit rate, i.e. reducing the number of streams to the number of layers. There are two implementation variants of DMRS-BF solutions that are being standardized in O-RAN WG4. The first variant is referred to as DMRS based beamforming with equalization ("DMRS-BF-EQ"), where equalization is performed in O-RU. The second variant is referred to as DMRS based beamforming without equalization ("DMRS-BF-NEQ"), where equalization is not performed in O-RU.

In wireless communication, an equalizer performs an equalization operation on the input signal, which reverses the distortion caused by the end-to-end channel including the transmitter chain, the over-the-air channel (including the wanted channel and the interference channel), and the receiver chain. After the equalization, the equalized symbols can be demodulated by a demodulator. When the input signal is from multiple transmitters which send different data, the equalizer may also mitigate the interferences between them. Equalizers can be linear or non-linear. Examples of linear equalizers are zeroforcing equalizer, MMSE equalizer etc. Examples of non-linear equalizers are decision-feedback equalizer ("DFE"), successive interference cancellation ("SIC") receiver etc.

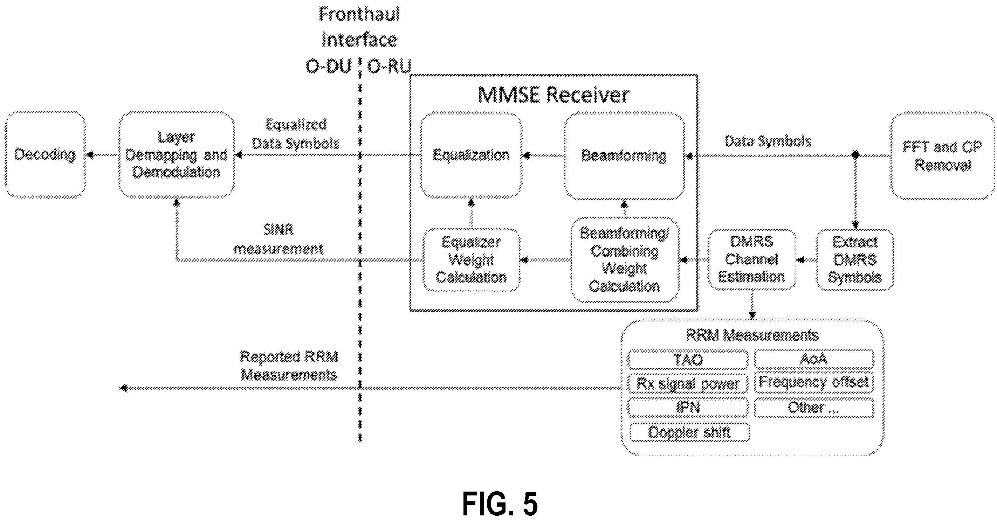

Various embodiments herein focus on the DMRS-BF-EQ variant. A typical implementation of DMRS-BF-EQ is shown in FIG. 5. The O-RU performs the equalization. In addition to the equalized data symbols, the O-RU sends the post-equalization signal to interference and noise ratio ("SINR") measurement from the O-RU to the O-DU which are used by the O-DU to demodulate the equalized symbols. The SINR measurement represents the measured/estimated SINR values, e.g., per physical resource block ("PRB") or finer frequency resolution per layer, which is used by the demodulator for demodulation of the symbols of each RE per layer, e.g., using the demodulation algorithm based on LLR (log likelihood ratio). The equalized data symbols are often referred to as soft values in demodulation terminology.

FIG. 5 further illustrates an example that the O-RU will also send radio resource management ("RRM") measurements which are calculated or measured before equalization. These measurements can't be calculated in the O-DU. That's why these measurements are calculated by the O-RU and sent to the O-DU. In some examples, the RRM measurements include a timing advance offset ("TAO") of UE signal: this is used for UE timing advance ("TA"). In additional or alternative examples, the RRM measurements include an estimate of received signal power of UE layer: this is used for UE closed loop power control. In additional or alternative examples, the RRM measurements include an interference plus noise ("IPN") power measurement: O-RU calculates the power of received interference and noise per PRB. This is useful for the scheduler in the O-DU to optimize scheduling decisions. There are two kinds of IPN measurements, i.e., IPN for the allocated PRBs and the unallocated PRBs, respectively. The allocated PRBs are the PRBs scheduled for UE traffic, while the unallocated PRBs are the PRBs having not UE traffic scheduled. In additional or alternative examples, other possible RRM measurements (such as delay spread, frequency offset, doppler shift, AoA (angle of arrival)) are also beneficial to support.

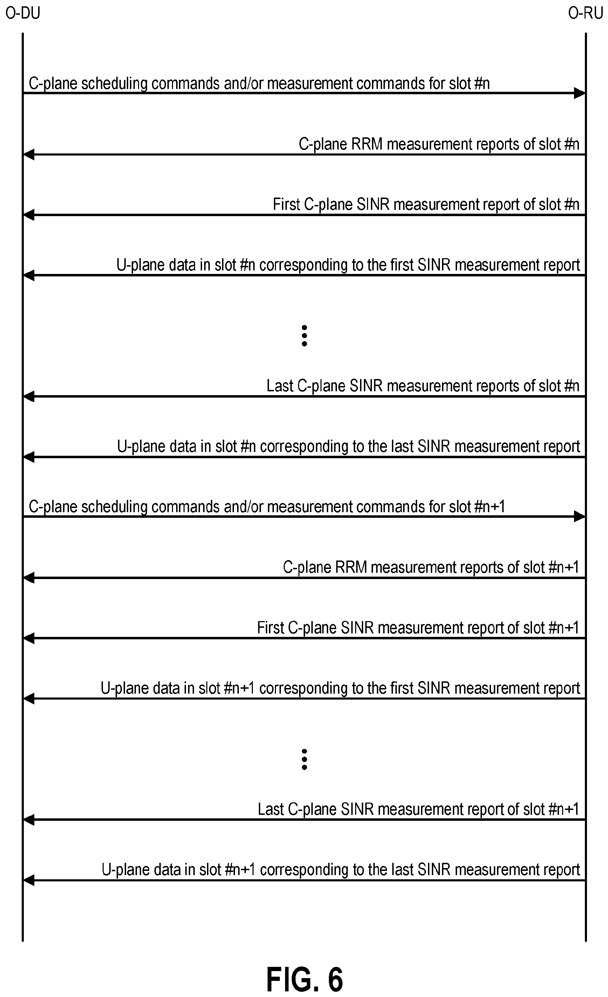

The new beamforming procedure of DMRS-BF-EQ also has an impact to the UL C-plane and U-plane data flows, as shown in FIG. 6, because of the support of measurement transferring. For DMRS-BF-EQ C-plane, new C-plane signaling between O-RU and O-DU is needed to provide the necessary information from O-DU to O-RU for the O-RU to perform DMRS-based beamforming and the necessary measurements from O-RU to O-DU to assist O-DU PUSCH (Physical Uplink Shared Channel) processing (e.g., demodulation) and RRM operations. From O-DU to O-RU, in addition to the information regarding the scheduled REs, the scheduling information need to contain DMRS configuration to be used and UE information representing the UEs and UE layers scheduled, as well as the measurement control. From O-RU to O-DU, the RRM measurements are transferred in C-plane messages, in addition to the U-plane messages. One or more SINR measurement reports are sent from the O-RU to the O-DU. Each SINR measurement report contains the SINR values for the scheduled PRBs, which are used to demodulate a set of consecutive symbols since the subcarriers with the same subcarrier indices in these symbols are equalized by the same equalization weights and thus have the same SINR values, which can be used for demodulation of these symbols. For example, in one slot with 14 symbols, symbol 0-6 are equalized according to the channel estimation from the first DMRS allocation, and the SINR will be calculated according to the equalization weights and channel estimates. The SINR values will be encapsulated in the first SINR report in C-plane. The O-RU will send the first SINR report C-plane message before sending the U-plane data for symbol 0-6. O-DU receives the first SINR report and uses the SINR values from the report to demodulate symbol 0-6 received from the following U-plane data. The same process takes places for symbol 7-13 with the second SINR report. In this example, there are two SINR measurement reports. The O-RU generates and sends the first SINR report that will be used for demodulating symbol 0-6 by O-DU. The O-RU generates and sends the second SINR report that will be used for demodulating symbol 7-13 by O-DU. Note that the O-RU may generate and send other number of SINR reports.

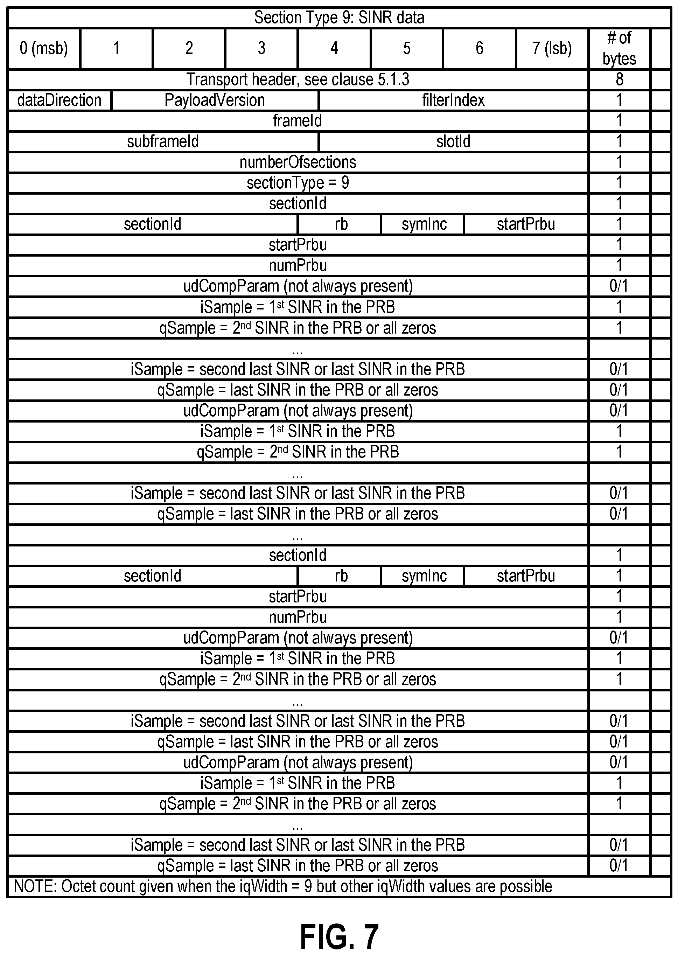

Currently, there is a proposal for SINR report in O-RAN WG4 specification. In the proposal, the supported time resolution for SINR report is controlled by a single parameter, sinr-per-slot, in M-plane, which defines the number of SINR reports per slot. And the allowed sinr-per-slot values are limited to 1, 2, 7, and 14, where each SINR report corresponds to equal number of symbols. For example, sinr-per-slot =2, the first SINR report corresponds to the first 7 symbols (symbol 0-6) and the second SINR report corresponds to the second 7 symbols (symbol 7-13). Via M-plane, the O-RU declares its supported sinr-per-slot values. Then, the O-DU configures which sinr-per-slot value will be used by the O-RU. The O-RU will use the configured sinr-per-slot value to generate and send SINR report. This has an impact how the O-RU performs equalization which needs to make sure the same SINR report can be used for the corresponding symbols. For example, the O-RU performs the same equalization operation for the symbols corresponding to the same SINR report. FIG. 7 shows the structure of the currently proposed Section Type 9 (ST9) for conveying a SINR report. Note that each SINR report reports certain number of SINR values per PRB (e.g., 12 subcarriers) for the scheduled PRBs. For example, if it reports one SINR value per PRB, the number of SINR values per SINR report will equal to the number of PRBs. The number of SINR values per PRB is controlled by another parameter, sinr-per-prb. When more than 1 symbols correspond to one SINR report, the same SINR values are applied for multiple symbols for the same PRB.

There currently exist certain challenges. A problem of the proposal mentioned above is that it doesn't support other sinr-per-slot values and non-equal number of symbols per SINR report efficiently. For example, if the O-RU wants to generate and send 3 SINR reports, where the first report is for symbol 0-4 (first 5 symbols), the second report is for symbol 5-8 (middle 4 symbols), and the third report is for symbol 9-13 (last 5 symbols). To support such settings, with the current proposal mentioned above, we can only configure the system to use sinr-per-slot = 14. It means that O-RU will always send 14 SINR reports, no matter how many unique SINR reports are actually used. It wastes the fronthaul bandwidth to report same reports repeatedly. The O-RU needs to use more HW and SW resources to generate more SINR reports and messages. The O-DU also needs to handle more SINR reports and messages as well. And the O-DU doesn't know directly how many SINR reports are used, unless it compares the SINR values in different SINR reports, which is cumbersome.

Certain aspects of the disclosure and their embodiments may provide solutions to these or other challenges. In some embodiments, support is provided for any symbol pattern for SINR reports by adding the information of the symbol pattern definition for each SINR report in C-plane and/or M-plane. The information of the symbol pattern definition can be in the form of symbol mask (indicating the boundaries of all SINR reports or the symbol range for each SINR report) or the start symbol ID plus the number of symbols for each report.

In some embodiments, a new field including the information of the symbol pattern definition is added in ST9 or a new section extension attached to ST9 in C-plane. The O-RU can change the value of this field dynamically. And the O-DU reads this field from the received ST9 and apply the received SINR report accordingly.

In additional or alternative embodiments, the O-RU declares its capability to support a number of DMRS configurations in M-plane. In addition, the O-RU declares one or more symbol patterns supported per DMRS configurations supported. Then, the O-DU configures one symbol pattern per supported DMRS configuration to be used by the O-RU. The O-DU knows the symbol pattern for each DMRS configuration in advance from M-plane configuration. It will apply the received SINR report to the corresponding symbols according to the DMRS configuration used.

In additional or alternative embodiments, the O-RU declares one or more symbol patterns supported per DMRS configurations supported. The patterns are not configurable by the O-DU. These patterns are for the O-DU to know. Also add a new field containing the information of the symbol pattern definition in ST9 or a new section extension attached to ST9 in C-plane. The O-RU can change the value of this field dynamically, i.e., switch among the supported symbol patterns declared.

Embodiments associated with communication of the symbol pattern (also referred to herein as the symbol-range pattern information) via a C-plane are described below.

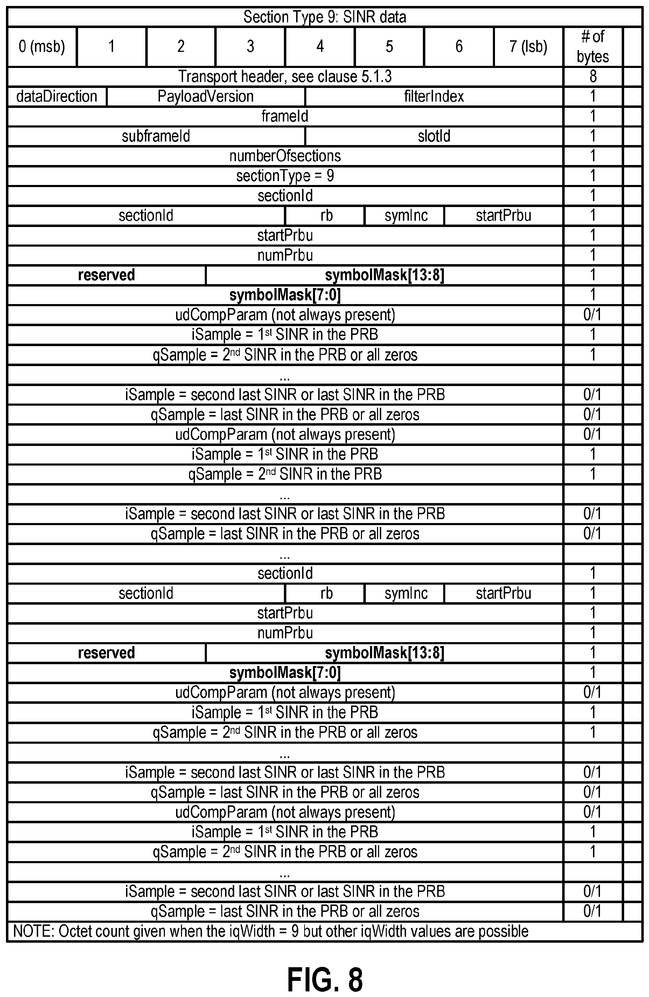

FIG. 8 illustrates an example of a proposal for a modified ST9. In this new ST9 structure, a "symbolMask" field is added in the section description of ST9. One ST9 message can contain one or more sections, each of which provides the SINR values for a separate PRB range. With this embodiment, the O-RU can change the symbol pattern of the SINR reports freely, e.g., according to the DMRS configuration used and the UE mobility metrics (e.g., Doppler) while the number of SINR report messages sent equal to the number of SINR reports needed. For example, for UEs with high Doppler, more SINR reports are used than that for the UEs with low Doppler. And, more SINR reports are used for the UEs configured with more DMRS symbol allocations used than the UEs configured with fewer DMRS symbol allocations.

In some examples, the "symbolMask" field is used to indicate the boundaries of all SINR reports and the "symbolId" field is used to indicate the first symbol of this report which gives the information which symbols the SINR report will apply to. Note that the "symbolId" field already exists and this invention is to add a new field of "symboIMask".

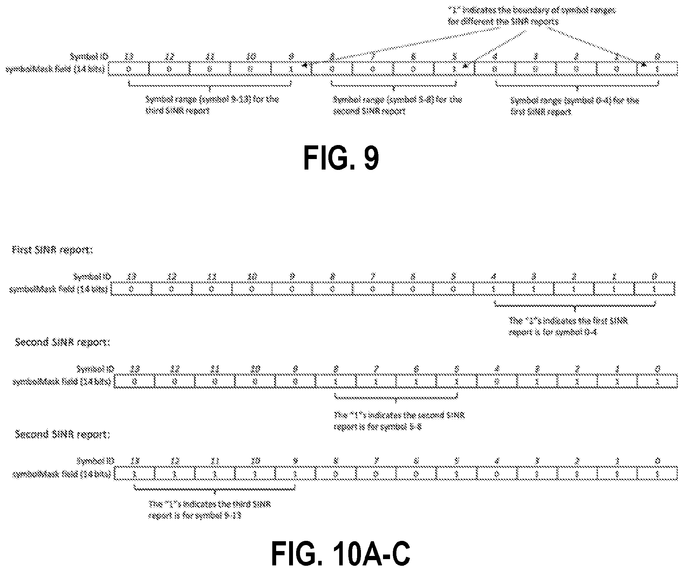

An example is shown in FIG. 9, where there are 3 SINR reports, where the first SINR report is for symbol 0-4, the second SINR report is for symbol 5-8, and the third SINR report is for symbol 9-13. In this example, symbolMask = 00001000100001, where the positions of ones are at bit 0, bit 5 and bit 9, indicating the start symbol corresponding to the first, second and third SINR report is symbol 0, symbol 5 and symbol 9, respectively. The same symbolMask value is repeated in each SINR report message in a slot. When the O-DU receives the ST9 message, the O-DU will read the value of the "symbolId" field and the value of the "symbolMask" field. From the "symbolMask" field, the O-DU knows the symbol range for each SINR report. Then, the O-DU knows the symbol range (i.e., the consecutive symbols) for this SINR report received using the value of the "symbolId" field. For example, if symbolId = 0 and symbolMask = 00001000100001 are read from the received ST9 SINR report, the O-DU knows this SINR report will be used for symbol 0-4. One advantage to use symbolMask to indicate the symbol boundaries of different SINR report is that the O-DU can know the number of SINR reports in this slot and the complete symbol pattern for all SINR reports from the first SINR report received. Then, the O-DU can be better prepared for processing the following SINR report since it knows how many reports will be followed and therefore can allocate a proper amount HW and SW resource. For the later SINR reports after the first SINR report in a slot, the O-DU knows which symbols to apply each SINR report from reading the "symbolId" field without reading the "symbolMask" field since the same symbolMask value has been provided in the first SINR report.

In additional or alternative examples, the "symbolMask" field indicates the symbols which the SINR report applies to. In this implementation, each SINR report will have different symbolMask value. FIGS. 10A-B illustrate an example of the same SINR reports of FIG. 9 being communicated by a series of "symbolMask" fields that each indicate the symbols corresponding to one of the SINR reports. The "1"s in the symbolMask field indicates the symbols which the SINR report applies to. Therefore, the O-DU knows which symbols to use each SINR report by reading the "symbolMask" field in the report message.

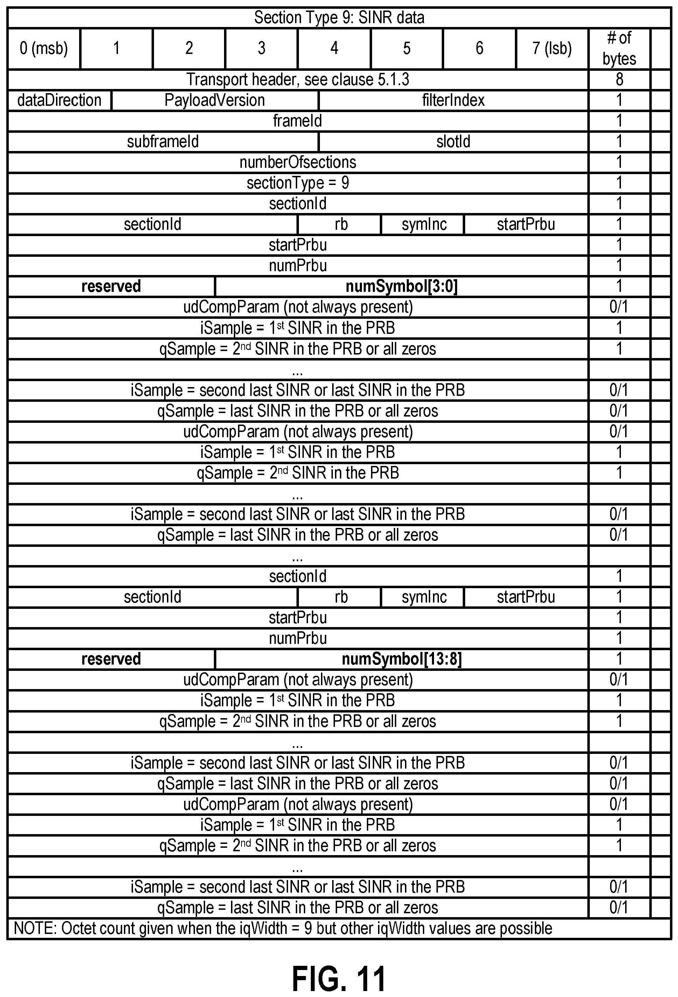

As an alternative to the symbolMask approach, FIG. 11 shows another approach adding a "numSymbol" field that indicates the number of consecutive symbols counting from the symbol indicated by the "symbolID" field. For the same example used in **Error! Reference source not found.** and **Error! Reference source not found.**, symbolId = 0 and numSymbol = 5 in the first SINR report message, symbolId = 5 and numSymbol = 4 in the second SINR report message, and symbolId = 9 and numSymbol = 5 in the third SINR report message. In this way, the O-DU knows which symbols to use the received SINR report from reading the "symbolId" field and the "numSymbol" field.

In the above embodiments, the new field of symbolMask or numSymbol is added as part of ST9. As an alternative, the new field can be added as part of a new section extension, which will be attached to each section of ST9. Then, the O-RU will add the section extension to each section of ST9 and the O-DU will read the field in the section extension instead.

Embodiments associated with communication of the symbol pattern (also referred to herein as the symbol-range pattern information) via a M-plane are described below.

In additional or alternative embodiments, the symbol pattern can be communicated via a M-plane. In some examples, communicating the symbol pattern via the M-plane can reduce the number of repetitions for the SINR report messages compared with the existing proposal. In additional or alternative examples, there is no modification in ST9. The improvement of this embodiment is that a specific symbol pattern for SINR reports for each DMRS configuration supported by the O-RU will be configured, while it is only possible to configure one pattern used for all DMRS configurations in the existing proposal. As mentioned before, to be able to use different number of SINR reports for different DMRS configurations, in the existing proposal, the O-RU has to send a SINR report message per symbol. It would cause a lot of repetitions of sending the same SINR report since the same SINR values are usually share with multiple consecutive symbols.

In additional or alternative embodiments, the O-RU declares its capability to support a number of DMRS configurations in M-plane. In addition, O-RU declares one or more symbol-range patterns supported for each DMRS configuration supported. The symbol-range pattern can be defined using a symbol mask indicating boundary between SINR reports, start symbol ID plus a symbol mask for each SINR report, or start symbol ID plus the number of consecutive symbols counting from the start symbol for each SINR report, etc. Then, the O-DU configures which symbol-range pattern to use. If the O-RU only declares one symbol-range pattern for a DMRS configuration, the O-DU will just configure to use it if the O-DU wants to use this DMRS configuration. If O-RU declares multiple symbol-range patterns for a DMRS configuration, O-DU will configure which pattern to use if the O-DU wants to use this DMRS configuration. In this way, the O-DU will send the DMRS configuration via C-plane. And the O-RU receives the DMRS configuration and will use the symbol-range pattern configured for this DMRS configuration to perform equalization and generate and send SINR reports accordingly. When the O-DU receives the SINR report, it knows already the DMRS configuration used and therefore know the symbol-range pattern for this DMRS configuration. Then it reads the "symbolId" field in the SINR report message and then knows which symbols to apply each received SINR report.

Embodiments associated with communication of the symbol pattern (also referred to herein as the symbol-range pattern information) via both M-plane and C-plane are described below.

In some embodiments, the O-RU declares its capability to support a number of DMRS configurations in M-plane. In addition, O-RU declares one or more symbol-range patterns supported for each DMRS configuration supported. The symbol-range pattern can be defined using the approach described above, using a symbol mask indicating boundary between SINR reports, start symbol ID plus a symbol mask for each SINR report, or start symbol ID plus the number of consecutive symbols counting from the start symbol for each SINR report, etc. In some examples, these patterns are not configured by the O-DU. All supported patterns are allowed, and the O-RU decides which one to use. In C-plane, the O-RU adds the information of the symbol pattern definition for each SINR report in C-plane, e.g., adding a new field of symbolMask or numSymbol in ST9 or a new section extension attached to ST9 in a C-plane message.

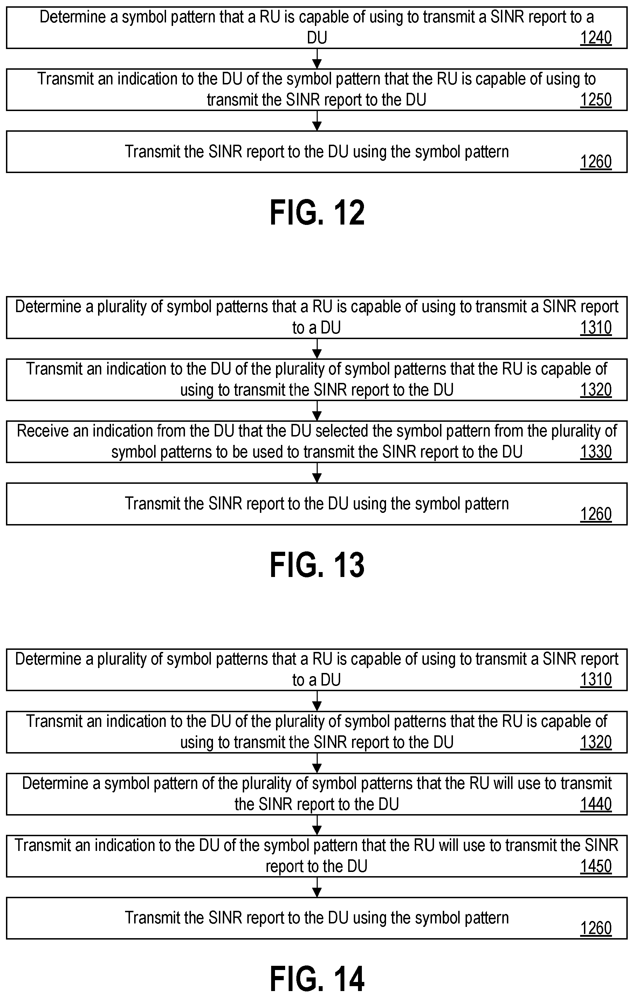

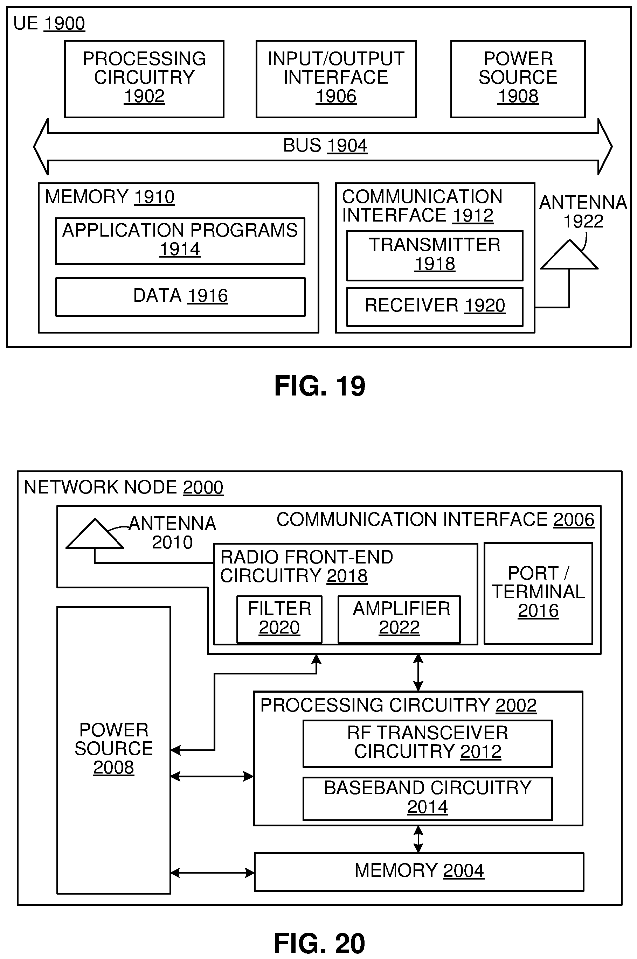

Operations of the network node 2000 (implemented using the structure of FIG. 20) will now be discussed with reference to the flow charts of FIGS. 12-17 according to some embodiments of inventive concepts. For example, modules may be stored in memory 2004 of FIG. 20, and these modules may provide instructions so that when the instructions of a module are executed by respective network node processing circuitry 2002, network node 2000 performs respective operations of the flow charts.

FIG. 12 illustrates an example of operations performed by a network node (e.g., a network node configured to provide a RU) to communicate a symbol pattern used for communicating SINR reports to another network node (e.g., a network node configured to provide a DU).

At block 1240, processing circuitry 2002 determines a symbol pattern that the RU is capable of using to transmit the SINR report to the DU. At block 1250, processing circuitry 2002 transmits, via communication interface 2006, an indication to the DU of the symbol pattern that the RU is capable of using to transmit the SINR report to the DU.

In some embodiments, determining the symbol pattern that the RU is capable of using to transmit the SINR report to the DU includes determining the symbol pattern to be used for transmitting the SINR report to the DU. Transmitting the indication to the DU of the symbol pattern that the RU is capable of using to transmit the SINR report to the DU includes transmitting an indication to the DU of the symbol pattern to be used for transmitting the SINR report to the DU.

In some examples, the SINR report is a first SINR report of a plurality of SINR reports. Determining the symbol pattern to be used for transmitting the SINR report to the DU includes determining the symbol pattern to be used for transmitting the plurality of SINR reports. Transmitting the indication to the DU of the symbol pattern to be used for transmitting the SINR report includes transmitting the indication to the DU of the symbol pattern to be used for transmitting the plurality of SINR reports to the DU.

In additional or alternative embodiments, transmitting the indication to the DU of the symbol pattern to be used for transmitting the SINR report to the DU includes transmitting a ST9 message via a C-plane to the DU, the ST9 message including the indication of the symbol pattern to be used for transmitting the SINR report to the DU.

In additional or alternative embodiments, transmitting the indication to the DU of the symbol pattern to be used for transmitting the SINR report to the DU includes transmitting a section extension attached to a ST9 message via a C-plane to the DU, the section extension including the indication of the symbol pattern to be used for transmitting the SINR report to the DU.

At block 1260, processing circuitry 2002 transmits, via communication interface 2006, the SINR report to the DU using the symbol pattern. In some embodiments, the SINR report is a first SINR of a plurality of SINR reports. Transmitting the SINR report to the DU using the symbol pattern includes: transmitting the first SINR report of the plurality of SINR reports within a first number of symbols associated with the symbol pattern; and transmitting a second SINR report of the plurality of SINR reports within a second number of symbols associated with the symbol pattern. In some examples, the first number of symbols associated with the symbol pattern is different than the second number of symbols associated with the symbol pattern.

In additional or alternative embodiments, transmitting the SINR report to the DU includes transmitting SINR data within a slot. The indication of the symbol pattern includes a symbol mask that indicates a position of the SINR report within the slot.

In some examples, the SINR report is a first SINR report of a plurality of SINR reports, and the symbol mask indicates a position of each SINR report of the plurality of SINR reports within the slot.

FIG. 13 illustrates another example of operations performed by a network node (e.g., a network node configured to provide a RU) to communicate a symbol pattern used for communicating SINR reports to another network node (e.g., a network node configured to provide a DU).

At block 1310, processing circuitry 2002 determines a plurality of symbol patterns that the RU is capable of using to transmit the SINR report to the DU. At block 1320, processing circuitry 2002 transmits, via communication interface 2006, an indication to the DU of the plurality of symbol patterns that the RU is capable of using to transmit the SINR report to the DU.

In some embodiments, transmitting the indication to the DU of the plurality of symbol patterns that the RU is capable of using to transmit the SINR report to the DU includes: transmitting an indication to the DU, via a management plane, M-plane, of a capability of the RU to support a demodulation reference signal. DMRS, configuration; and transmitting an indication to the DU, via the M-plane, that the RU is capable of using any of the plurality of symbol patterns to transmit a SINR report associated with the DMRS configuration.

At block 1330, processing circuitry 2002 receives, via communication interface 2006, an indication from the DU that the DU selected the symbol pattern from the plurality of symbol patterns to be used to transmit the SINR report to the DU.

As in block 1260 of FIG. 12, at block 1260 of FIG. 13, processing circuitry 2002 transmits, via communication interface 2012, the SINR report to the DU using the symbol pattern.

FIG. 14 illustrates another example of operations performed by a network node (e.g., a network node configured to provide a RU) to communicate a symbol pattern used for communicating SINR reports to another network node (e.g., a network node configured to provide a DU). In some example, the operations are a combination of some of the operations of FIGS. 12-13 (e.g., block 1260 of FIG. 12, blocks 1310 and 1320 of FIG. 13) and blocks 1450 and 1460 are example implementations of blocks 1240 and 1250 of FIG. 12.

As in block 1310 of FIG. 13, at block 1310 of FIG. 14, processing circuitry 2002 determines a plurality of symbol patterns that the RU is capable of using to transmit the SINR report to the DU.

As in block 1320 of FIG. 13, at block 1320 of FIG. 14, processing circuitry 2002 transmits, via communication interface 2006, an indication to the DU of the plurality of symbol patterns that the RU is capable of using to transmit the SINR report to the DU.

At block 1440, processing circuitry 2002 determines a symbol pattern of the plurality of symbol patterns that the RU will use to transmit the SINR report to the DU.

At block 1450, processing circuitry 2002 transmits, via communication interface 2006, an indication to the DU of the symbol pattern that the RU will use to transmit the SINR report to the DU.

At block 1260, processing circuitry 2002 transmits, via communication interface 2006, the SINR report to the DU using the symbol pattern.

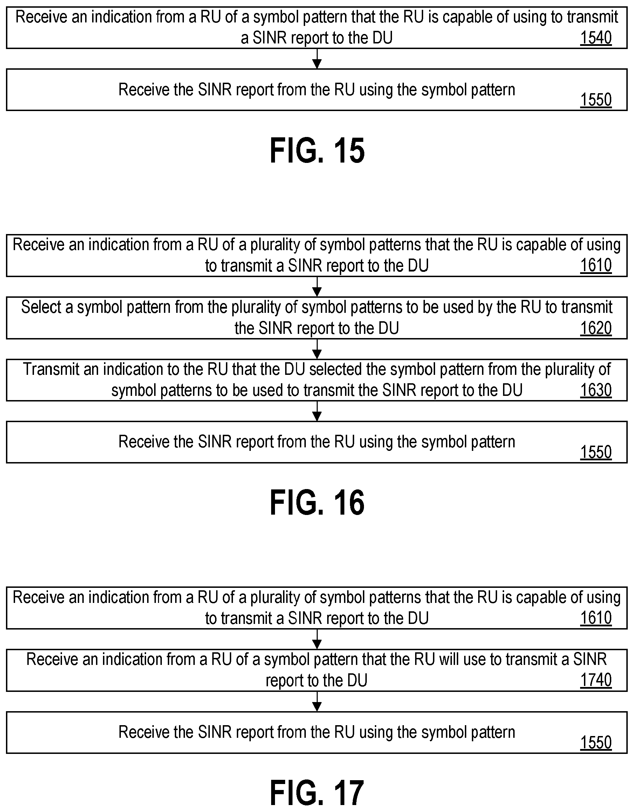

FIG. 15 illustrates an example of operations performed by a network node (e.g., a network node configured to provide a DU) to communicate a symbol pattern used for receiving SINR reports from another network node (e.g., a network node configured to provide a RU).

At block 1540, processing circuitry 2002 receives, via communication interface 2006, an indication from a RU of a symbol pattern that the RU is capable of using to transmit a SINR report to the DU. In some embodiments, receiving the indication from the RU of the symbol pattern that the RU is capable of using to transmit the SINR report to the DU includes receiving an indication from the RU that the symbol pattern will be used for transmitting the SINR report to the DU. In some examples, the SINR report is a first SINR report of a plurality of SINR reports. Receiving the indication from the RU that the symbol pattern will be used for transmitting the SINR report includes receiving the indication from the DU that the symbol pattern will be used for transmitting the plurality of SINR reports to the DU.

In additional or alternative embodiments, receiving the indication from the RU that the symbol pattern will be used for transmitting the SINR report to the DU includes at least one of: receiving a Section Type 9, ST9, message via a control plane, C-plane, from the RU, the ST9 message including the indication that the symbol pattern will be used for transmitting the SINR report to the DU; and receiving a section extension attached to a ST9 message via a C-plane from the RU, the section extension including the indication of the symbol pattern to be used for transmitting the SINR report to the DU.

At block 1550, processing circuitry 2002 receives, via communication interface 2006, the SINR report from the RU using the symbol pattern. In some embodiments, the SINR report is a first SINR of the plurality of SINR reports. Receiving the SINR report from the RU using the symbol pattern includes: receiving the first SINR report of the plurality of SINR reports within a first number of symbols associated with the symbol pattern; and receiving a second SINR report of the plurality of SINR reports within a second number of symbols associated with the symbol pattern. In some examples, the first number of symbols associated with the symbol pattern is different than the second number of symbols associated with the symbol pattern.

In some embodiments, receiving the SINR report from the RU using the symbol pattern includes determining a number of reports in the plurality of SINR reports from the symbol pattern.

In some examples, receiving the SINR report from the RU includes receiving SINR data within a slot. The indication of the symbol pattern includes a symbol mask that indicates a position of the SINR report within the slot.

In additional or alternative examples, the SINR report is a first SINR report of a plurality of SINR reports. The symbol mask indicates a position of each SINR report of the plurality of SINR reports within the slot.

FIG. 16 illustrates another example of operations performed by a network node (e.g., a network node configured to provide a DU) to communicate a symbol pattern used for receiving SINR reports from another network node (e.g., a network node configured to provide a RU).

At block 1610, processing circuitry 2002 receives, via communication interface 2006 an indication from a RU of a plurality of symbol patterns that the RU is capable of using to transmit a SINR report to the DU. In some embodiments, receiving the indication from the RU of the plurality of symbol patterns that the RU is capable of using to transmit the SINR report to the DU includes: receiving an indication from the RU, via a management plane, M-plane, of a capability of the RU to support a demodulation reference signal, DMRS, configuration; and receiving an indication from the RU, via the M-plane, that the RU is capable of using any of the plurality of symbol patterns to transmit the SINR report associated with the DMRS configuration.

At block 1620, processing circuitry 2002 selects a symbol pattern from the plurality of symbol patterns to be used by the RU to transmit the SINR report to the DU.

At block 1630, processing circuitry 2002 transmit, via communication interface 2006, an indication to the RU that the DU selected the symbol pattern form the plurality of symbol patterns to be used to transmit the SINR report to the DU.

As in block 1550 of FIG. 15, at block 1550 of FIG. 16, processing circuitry 2002 receives, via communication interface 2006, the SINR report from the RU using the symbol pattern.

FIG. 17 illustrates another example of operations performed by a network node (e.g., a network node configured to provide a DU) to communicate a symbol pattern used for receiving SINR reports from another network node (e.g., a network node configured to provide a RU). In some example, the operations are a combination of some of the operations of FIGS. 15-16 (e.g., block 1550 of FIG. 15, block 1610 of FIG. 16) and block 1740 is an example implementation of block 1540 of FIG. 15.

As in block 1610 of FIG. 16, at block 1610 of FIG. 17, processing circuitry 2002 receives, via communication interface 2006, an indication from a RU of a plurality of symbol patterns that the RU is capable of using to transmit a SINR report to the DU.

At block 1740, processing circuitry 2002 receives, via communication interface 2006, an indication from a RU of a symbol pattern that the RU will use to transmit a SINR report to the DU.

As in block 1550 of FIG. 15, at block 1550 of FIG. 17, processing circuitry 2002 receives, via communication interface 2006, the SINR report from the RU using the symbol pattern.

Various operations from the flow charts of FIGS.12-17 may be optional with respect to some embodiments of network entities and related methods.

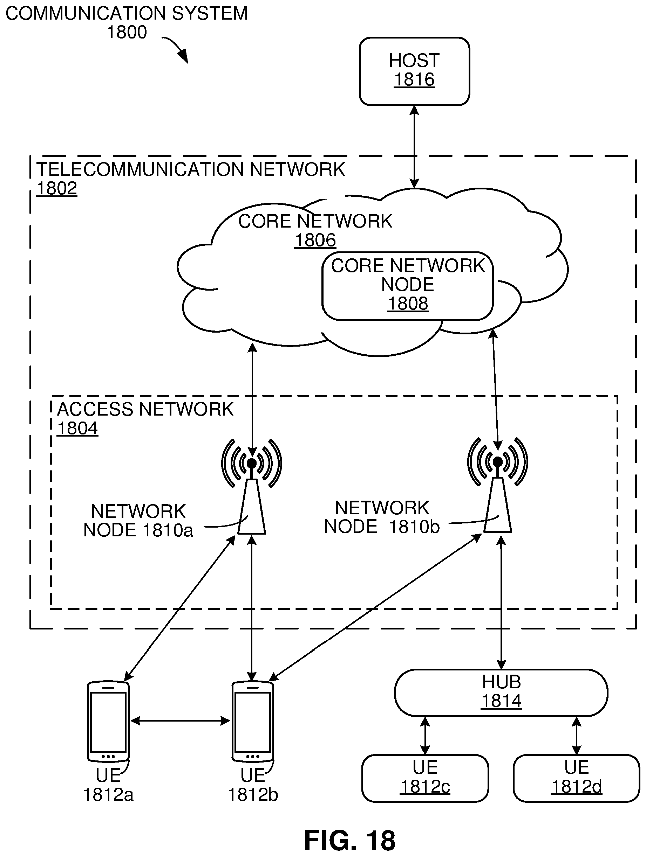

FIG. 18 shows an example of a communication system 1800 in accordance with some embodiments.

In the example, the communication system 1800 includes a telecommunication network 1802 that includes an access network 1804, such as a radio access network (RAN), and a core network 1806, which includes one or more core network nodes 1808. The access network 1804 includes one or more access network nodes, such as network nodes 1810a and 1810b (one or more of which may be generally referred to as network nodes 1810), or any other similar 3rd Generation Partnership Project (3GPP) access node or non-3GPP access point. Moreover, as will be appreciated by those of skill in the art, the network nodes 1810 are not necessarily limited to an implementation in which a radio portion and a baseband portion are supplied and integrated by a single vendor. Thus, it will be understood that the network nodes 1810 may include disaggregated implementations or portions thereof. For example, in some embodiments, the telecommunication network 1802 includes one or more Open-RAN (ORAN) network nodes. An ORAN network node is a node in the telecommunication network 1802 that supports an ORAN specification (e.g., a specification published by the O-RAN Alliance, or any similar organization) and may operate alone or together with other nodes to implement one or more functionalities of any node in the telecommunication network 1802, including one or more network nodes 1810 and/or core network nodes 1808.

Examples of an ORAN network node include an open radio unit (O-RU), an open distributed unit (O-DU), an open central unit (O-CU), including an O-CU control plane (O-CU-CP) or an O-CU user plane (O-CU-UP), a RAN intelligent controller (near-real time or non-real time) hosting software or software plug-ins, such as a near-real time RAN control application (e.g., xApp) or a non-real time RAN automation application (e.g., rApp), or any combination thereof (the adjective "open" designating support of an ORAN specification). The network node may support a specification by, for example, supporting an interface defined by the ORAN specification, such as an A1, F1, W1, E1, E2, X2, Xn interface, an open fronthaul user plane interface, or an open fronthaul management plane interface. Intents and content-aware notifications described herein may be communicated from a 3GPP network node or an ORAN network node over 3GPP-defined interfaces (e.g., N2, N3) and/or ORAN Alliance-defined interfaces (e.g., A1, O1). Moreover, an ORAN network node may be a logical node in a physical node. Furthermore, an ORAN network node may be implemented in a virtualization environment (described further below) in which one or more network functions are virtualized. For example, the virtualization environment may include an O-Cloud computing platform orchestrated by a Service Management and Orchestration Framework via an O-2 interface defined by the O-RAN Alliance. The network nodes 1810 facilitate direct or indirect connection of user equipment (UE), such as by connecting wireless devices 1812a, 1812b, 1812c, and 1812d (one or more of which may be generally referred to as UEs 1812) to the core network 1806 over one or more wireless connections. The network nodes 1810 facilitate direct or indirect connection of user equipment (UE), such as by connecting UEs 1812a, 1812b, 1812c, and 1812d (one or more of which may be generally referred to as UEs 1812) to the core network 1806 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1800 may include any number of wired or wireless networks, network nodes, UEs, and/or any other components or systems that may facilitate or participate in the communication of data and/or signals whether via wired or wireless connections. The communication system 1800 may include and/or interface with any type of communication, telecommunication, data, cellular, radio network, and/or other similar type of system.

The UEs 1812 may be any of a wide variety of communication devices, including wireless devices arranged, configured, and/or operable to communicate wirelessly with the network nodes 1810 and other communication devices. Similarly, the network nodes 1810 are arranged, capable, configured, and/or operable to communicate directly or indirectly with the UEs 1812 and/or with other network nodes or equipment in the telecommunication network 1802 to enable and/or provide network access, such as wireless network access, and/or to perform other functions, such as administration in the telecommunication network 1802.

In the depicted example, the core network 1806 connects the network nodes 1810 to one or more hosts, such as host 1816. These connections may be direct or indirect via one or more intermediary networks or devices. In other examples, network nodes may be directly coupled to hosts. The core network 1806 includes one more core network nodes (e.g., core network node 1808) that are structured with hardware and software components. Features of these components may be substantially similar to those described with respect to the UEs, network nodes, and/or hosts, such that the descriptions thereof are generally applicable to the corresponding components of the core network node 1808. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1816 may be under the ownership or control of a service provider other than an operator or provider of the access network 1804 and/or the telecommunication network 1802, and may be operated by the service provider or on behalf of the service provider. The host 1816 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1800 of FIG. 18 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1802 is a cellular network that implements 3GPP standardized features. Accordingly, the telecommunications network 1802 may support network slicing to provide different logical networks to different devices that are connected to the telecommunication network 1802. For example, the telecommunications network 1802 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 1812 are configured to transmit and/or receive information without direct human interaction. For instance, a UE may be designed to transmit information to the access network 1804 on a predetermined schedule, when triggered by an internal or external event, or in response to requests from the access network 1804. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1814 communicates with the access network 1804 to facilitate indirect communication between one or more UEs (e.g., UE 1812c and/or 1812d) and network nodes (e.g., network node 1810b). In some examples, the hub 1814 may be a controller, router, content source and analytics, or any of the other communication devices described herein regarding UEs. For example, the hub 1814 may be a broadband router enabling access to the core network 1806 for the UEs. As another example, the hub 1814 may be a controller that sends commands or instructions to one or more actuators in the UEs. Commands or instructions may be received from the UEs, network nodes 1810, or by executable code, script, process, or other instructions in the hub 1814. As another example, the hub 1814 may be a data collector that acts as temporary storage for UE data and, in some embodiments, may perform analysis or other processing of the data. As another example, the hub 1814 may be a content source. For example, for a UE that is a VR headset, display, loudspeaker or other media delivery device, the hub 1814 may retrieve VR assets, video, audio, or other media or data related to sensory information via a network node, which the hub 1814 then provides to the UE either directly, after performing local processing, and/or after adding additional local content. In still another example, the hub 1814 acts as a proxy server or orchestrator for the UEs, in particular in if one or more of the UEs are low energy IoT devices.

The hub 1814 may have a constant, persistent or intermittent connection to the network node 1810b. The hub 1814 may also allow for a different communication scheme and/or schedule between the hub 1814 and UEs (e.g., UE 1812c and/or 1812d), and between the hub 1814 and the core network 1806. In other examples, the hub 1814 is connected to the core network 1806 and/or one or more UEs via a wired connection. Moreover, the hub 1814 may be configured to connect to an M2M service provider over the access network 1804 and/or to another UE over a direct connection. In some scenarios, UEs may establish a wireless connection with the network nodes 1810 while still connected via the hub 1814 via a wired or wireless connection. In some embodiments, the hub 1814 may be a dedicated hub - that is, a hub whose primary function is to route communications to/from the UEs from/to the network node 1810b. In other embodiments, the hub 1814 may be a non-dedicated hub - that is, a device which is capable of operating to route communications between the UEs and network node 1810b, but which is additionally capable of operating as a communication start and/or end point for certain data channels.

FIG. 19 shows a UE 1900 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1900 includes processing circuitry 1902 that is operatively coupled via a bus 1904 to an input/output interface 1906, a power source 1908, a memory 1910, a communication interface 1912, and/or any other component, or any combination thereof. Certain UEs may utilize all or a subset of the components shown in FIG. 19. The level of integration between the components may vary from one UE to another UE. Further, certain UEs may contain multiple instances of a component, such as multiple processors, memories, transceivers, transmitters, receivers, etc.

The processing circuitry 1902 is configured to process instructions and data and may be configured to implement any sequential state machine operative to execute instructions stored as machine-readable computer programs in the memory 1910. The processing circuitry 1902 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1902 may include multiple central processing units (CPUs).

In the example, the input/output interface 1906 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1900. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1908 is structured as a battery or battery pack. Other types of power sources, such as an external power source (e.g., an electricity outlet), photovoltaic device, or power cell, may be used. The power source 1908 may further include power circuitry for delivering power from the power source 1908 itself, and/or an external power source, to the various parts of the UE 1900 via input circuitry or an interface such as an electrical power cable. Delivering power may be, for example, for charging of the power source 1908. Power circuitry may perform any formatting, converting, or other modification to the power from the power source 1908 to make the power suitable for the respective components of the UE 1900 to which power is supplied.

The memory 1910 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1910 includes one or more application programs 1914, such as an operating system, web browser application, a widget, gadget engine, or other application, and corresponding data 1916. The memory 1910 may store, for use by the UE 1900, any of a variety of various operating systems or combinations of operating systems.

The memory 1910 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1910 may allow the UE 1900 to access instructions, application programs and the like, stored on transitory or non-transitory memory media, to off-load data, or to upload data. An article of manufacture, such as one utilizing a communication system may be tangibly embodied as or in the memory 1910, which may be or comprise a device-readable storage medium.

The processing circuitry 1902 may be configured to communicate with an access network or other network using the communication interface 1912. The communication interface 1912 may comprise one or more communication subsystems and may include or be communicatively coupled to an antenna 1922. The communication interface 1912 may include one or more transceivers used to communicate, such as by communicating with one or more remote transceivers of another device capable of wireless communication (e.g., another UE or a network node in an access network). Each transceiver may include a transmitter 1918 and/or a receiver 1920 appropriate to provide network communications (e.g., optical, electrical, frequency allocations, and so forth). Moreover, the transmitter 1918 and receiver 1920 may be coupled to one or more antennas (e.g., antenna 1922) and may share circuit components, software or firmware, or alternatively be implemented separately.

In the illustrated embodiment, communication functions of the communication interface 1912 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1912, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 1900 shown in FIG. 19.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

FIG. 20 shows a network node 2000 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs), NR NodeBs (gNBs)), O-RAN nodes, or components of an O-RAN node (e.g., intelligent controller, O-RU, O-DU, O-CU).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 2000 includes a processing circuitry 2002, a memory 2004, a communication interface 2006, and a power source 2008. The network node 2000 may be composed of multiple physically separate components (e.g., a NodeB component and a RNC component, or a BTS component and a BSC component, etc.), which may each have their own respective components. In certain scenarios in which the network node 2000 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 2000 may be configured to support multiple radio access technologies (RATs). In such embodiments, some components may be duplicated (e.g., separate memory 2004 for different RATs) and some components may be reused (e.g., a same antenna 2010 may be shared by different RATs). The network node 2000 may also include multiple sets of the various illustrated components for different wireless technologies integrated into network node 2000, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 2000.

The processing circuitry 2002 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 2000 components, such as the memory 2004, to provide network node 2000 functionality.

In some embodiments, the processing circuitry 2002 includes a system on a chip (SOC). In some embodiments, the processing circuitry 2002 includes one or more of radio frequency (RF) transceiver circuitry 2012 and baseband processing circuitry 2014. In some embodiments, the radio frequency (RF) transceiver circuitry 2012 and the baseband processing circuitry 2014 may be on separate chips (or sets of chips), boards, or units, such as radio units and digital units. In alternative embodiments, part or all of RF transceiver circuitry 2012 and baseband processing circuitry 2014 may be on the same chip or set of chips, boards, or units.

The memory 2004 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 2002. The memory 2004 may store any suitable instructions, data, or information, including a computer program, software, an application including one or more of logic, rules, code, tables, and/or other instructions capable of being executed by the processing circuitry 2002 and utilized by the network node 2000. The memory 2004 may be used to store any calculations made by the processing circuitry 2002 and/or any data received via the communication interface 2006. In some embodiments, the processing circuitry 2002 and memory 2004 is integrated.

The communication interface 2006 is used in wired or wireless communication of signaling and/or data between a network node, access network, and/or UE. As illustrated, the communication interface 2006 comprises port(s)/terminal(s) 2016 to send and receive data, for example to and from a network over a wired connection. The communication interface 2006 also includes radio front-end circuitry 2018 that may be coupled to, or in certain embodiments a part of, the antenna 2010. Radio front-end circuitry 2018 comprises filters 2020 and amplifiers 2022. The radio front-end circuitry 2018 may be connected to an antenna 2010 and processing circuitry 2002. The radio front-end circuitry may be configured to condition signals communicated between antenna 2010 and processing circuitry 2002. The radio front-end circuitry 2018 may receive digital data that is to be sent out to other network nodes or UEs via a wireless connection. The radio front-end circuitry 2018 may convert the digital data into a radio signal having the appropriate channel and bandwidth parameters using a combination of filters 2020 and/or amplifiers 2022. The radio signal may then be transmitted via the antenna 2010. Similarly, when receiving data, the antenna 2010 may collect radio signals which are then converted into digital data by the radio front-end circuitry 2018. The digital data may be passed to the processing circuitry 2002. In other embodiments, the communication interface may comprise different components and/or different combinations of components.

In certain alternative embodiments, the network node 2000 does not include separate radio front-end circuitry 2018, instead, the processing circuitry 2002 includes radio front-end circuitry and is connected to the antenna 2010. Similarly, in some embodiments, all or some of the RF transceiver circuitry 2012 is part of the communication interface 2006. In still other embodiments, the communication interface 2006 includes one or more ports or terminals 2016, the radio front-end circuitry 2018, and the RF transceiver circuitry 2012, as part of a radio unit (not shown), and the communication interface 2006 communicates with the baseband processing circuitry 2014, which is part of a digital unit (not shown).

The antenna 2010 may include one or more antennas, or antenna arrays, configured to send and/or receive wireless signals. The antenna 2010 may be coupled to the radio front-end circuitry 2018 and may be any type of antenna capable of transmitting and receiving data and/or signals wirelessly. In certain embodiments, the antenna 2010 is separate from the network node 2000 and connectable to the network node 2000 through an interface or port.

The antenna 2010, communication interface 2006, and/or the processing circuitry 2002 may be configured to perform any receiving operations and/or certain obtaining operations described herein as being performed by the network node. Any information, data and/or signals may be received from a UE, another network node and/or any other network equipment. Similarly, the antenna 2010, the communication interface 2006, and/or the processing circuitry 2002 may be configured to perform any transmitting operations described herein as being performed by the network node. Any information, data and/or signals may be transmitted to a UE, another network node and/or any other network equipment.

The power source 2008 provides power to the various components of network node 2000 in a form suitable for the respective components (e.g., at a voltage and current level needed for each respective component). The power source 2008 may further comprise, or be coupled to, power management circuitry to supply the components of the network node 2000 with power for performing the functionality described herein. For example, the network node 2000 may be connectable to an external power source (e.g., the power grid, an electricity outlet) via an input circuitry or interface such as an electrical cable, whereby the external power source supplies power to power circuitry of the power source 2008. As a further example, the power source 2008 may comprise a source of power in the form of a battery or battery pack which is connected to, or integrated in, power circuitry. The battery may provide backup power should the external power source fail.

Embodiments of the network node 2000 may include additional components beyond those shown in FIG. 20 for providing certain aspects of the network node's functionality, including any of the functionality described herein and/or any functionality necessary to support the subject matter described herein. For example, the network node 2000 may include user interface equipment to allow input of information into the network node 2000 and to allow output of information from the network node 2000. This may allow a user to perform diagnostic, maintenance, repair, and other administrative functions for the network node 2000.

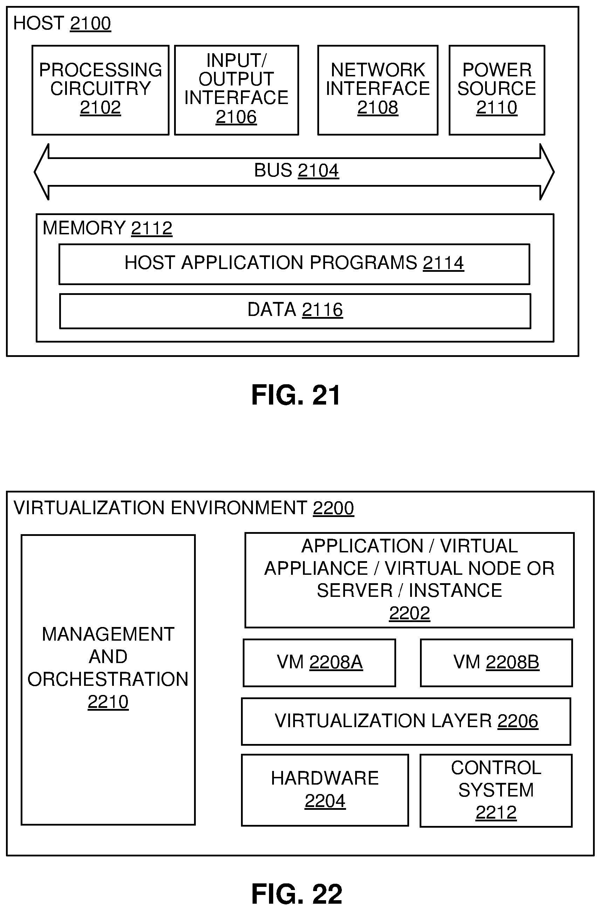

FIG. 21 is a block diagram of a host 2100, which may be an embodiment of the host 1816 of FIG. 18, in accordance with various aspects described herein. As used herein, the host 2100 may be or comprise various combinations hardware and/or software, including a standalone server, a blade server, a cloud-implemented server, a distributed server, a virtual machine, container, or processing resources in a server farm. The host 2100 may provide one or more services to one or more UEs.

The host 2100 includes processing circuitry 2102 that is operatively coupled via a bus 2104 to an input/output interface 2106, a network interface 2108, a power source 2110, and a memory 2112. Other components may be included in other embodiments. Features of these components may be substantially similar to those described with respect to the devices of previous figures, such as FIGS. 19 and 20, such that the descriptions thereof are generally applicable to the corresponding components of host 2100.

The memory 2112 may include one or more computer programs including one or more host application programs 2114 and data 2116, which may include user data, e.g., data generated by a UE for the host 2100 or data generated by the host 2100 for a UE. Embodiments of the host 2100 may utilize only a subset or all of the components shown. The host application programs 2114 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 2114 may also provide for user authentication and licensing checks and may periodically report health, routes, and content availability to a central node, such as a device in or on the edge of a core network. Accordingly, the host 2100 may select and/or indicate a different host for over-the-top services for a UE. The host application programs 2114 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

FIG. 22 is a block diagram illustrating a virtualization environment 2200 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 2200 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized. In some embodiments, the virtualization environment 2200 includes components defined by the O-RAN Alliance, such as an O-Cloud environment orchestrated by a Service Management and Orchestration Framework via an O-2 interface.

Applications 2202 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 2204 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 2206 (also referred to as hypervisors or virtual machine monitors (VMMs)), provide VMs 2208a and 2208b (one or more of which may be generally referred to as VMs 2208), and/or perform any of the functions, features and/or benefits described in relation with some embodiments described herein. The virtualization layer 2206 may present a virtual operating platform that appears like networking hardware to the VMs 2208.

The VMs 2208 comprise virtual processing, virtual memory, virtual networking or interface and virtual storage, and may be run by a corresponding virtualization layer 2206. Different embodiments of the instance of a virtual appliance 2202 may be implemented on one or more of VMs 2208, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 2208 may be a software implementation of a physical machine that runs programs as if they were executing on a physical, non-virtualized machine. Each of the VMs 2208, and that part of hardware 2204 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 2208 on top of the hardware 2204 and corresponds to the application 2202.

Hardware 2204 may be implemented in a standalone network node with generic or specific components. Hardware 2204 may implement some functions via virtualization. Alternatively, hardware 2204 may be part of a larger cluster of hardware (e.g. such as in a data center or CPE) where many hardware nodes work together and are managed via management and orchestration 2210, which, among others, oversees lifecycle management of applications 2202. In some embodiments, hardware 2204 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 2212 which may alternatively be used for communication between hardware nodes and radio units.

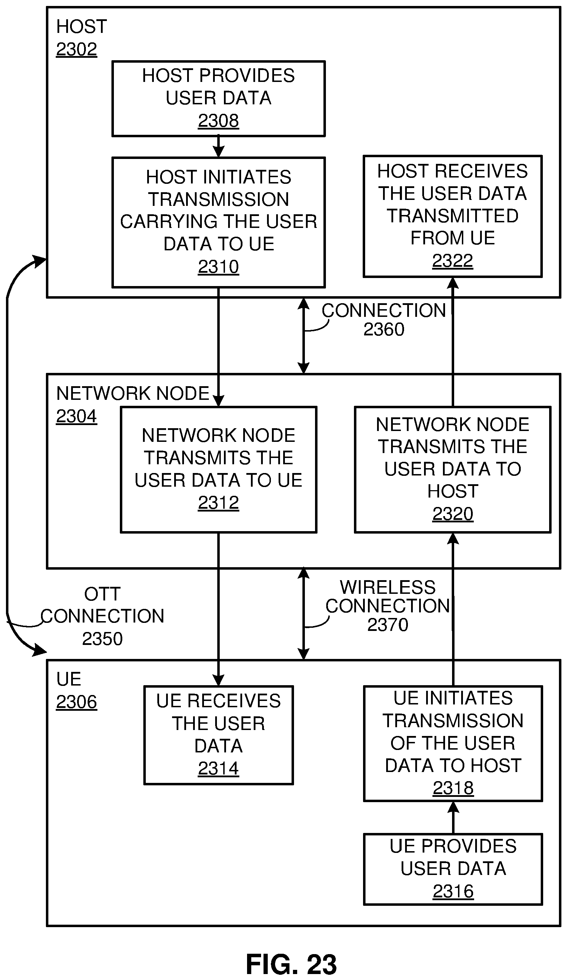

FIG. 23 shows a communication diagram of a host 2302 communicating via a network node 2304 with a UE 2306 over a partially wireless connection in accordance with some embodiments. Example implementations, in accordance with various embodiments, of the UE (such as a UE 1812a of FIG. 18 and/or UE 1900 of FIG. 19), network node (such as network node 1810a of FIG. 18 and/or network node 2000 of FIG. 20), and host (such as host 1816 of FIG. 18 and/or host 2100 of FIG. 21) discussed in the preceding paragraphs will now be described with reference to FIG. 23.

Like host 2100, embodiments of host 2302 include hardware, such as a communication interface, processing circuitry, and memory. The host 2302 also includes software, which is stored in or accessible by the host 2302 and executable by the processing circuitry. The software includes a host application that may be operable to provide a service to a remote user, such as the UE 2306 connecting via an over-the-top (OTT) connection 2350 extending between the UE 2306 and host 2302. In providing the service to the remote user, a host application may provide user data which is transmitted using the OTT connection 2350.

The network node 2304 includes hardware enabling it to communicate with the host 2302 and UE 2306. The connection 2360 may be direct or pass through a core network (like core network 1806 of FIG. 18) and/or one or more other intermediate networks, such as one or more public, private, or hosted networks. For example, an intermediate network may be a backbone network or the Internet.

The UE 2306 includes hardware and software, which is stored in or accessible by UE 2306 and executable by the UE's processing circuitry. The software includes a client application, such as a web browser or operator-specific "app" that may be operable to provide a service to a human or non-human user via UE 2306 with the support of the host 2302. In the host 2302, an executing host application may communicate with the executing client application via the OTT connection 2350 terminating at the UE 2306 and host 2302. In providing the service to the user, the UE's client application may receive request data from the host's host application and provide user data in response to the request data. The OTT connection 2350 may transfer both the request data and the user data. The UE's client application may interact with the user to generate the user data that it provides to the host application through the OTT connection 2350.

The OTT connection 2350 may extend via a connection 2360 between the host 2302 and the network node 2304 and via a wireless connection 2370 between the network node 2304 and the UE 2306 to provide the connection between the host 2302 and the UE 2306. The connection 2360 and wireless connection 2370, over which the OTT connection 2350 may be provided, have been drawn abstractly to illustrate the communication between the host 2302 and the UE 2306 via the network node 2304, without explicit reference to any intermediary devices and the precise routing of messages via these devices.

As an example of transmitting data via the OTT connection 2350, in step 2308, the host 2302 provides user data, which may be performed by executing a host application. In some embodiments, the user data is associated with a particular human user interacting with the UE 2306. In other embodiments, the user data is associated with a UE 2306 that shares data with the host 2302 without explicit human interaction. In step 2310, the host 2302 initiates a transmission carrying the user data towards the UE 2306. The host 2302 may initiate the transmission responsive to a request transmitted by the UE 2306. The request may be caused by human interaction with the UE 2306 or by operation of the client application executing on the UE 2306. The transmission may pass via the network node 2304, in accordance with the teachings of the embodiments described throughout this disclosure. Accordingly, in step 2312, the network node 2304 transmits to the UE 2306 the user data that was carried in the transmission that the host 2302 initiated, in accordance with the teachings of the embodiments described throughout this disclosure. In step 2314, the UE 2306 receives the user data carried in the transmission, which may be performed by a client application executed on the UE 2306 associated with the host application executed by the host 2302.

In some examples, the UE 2306 executes a client application which provides user data to the host 2302. The user data may be provided in reaction or response to the data received from the host 2302. Accordingly, in step 2316, the UE 2306 may provide user data, which may be performed by executing the client application. In providing the user data, the client application may further consider user input received from the user via an input/output interface of the UE 2306. Regardless of the specific manner in which the user data was provided, the UE 2306 initiates, in step 2318, transmission of the user data towards the host 2302 via the network node 2304. In step 2320, in accordance with the teachings of the embodiments described throughout this disclosure, the network node 2304 receives user data from the UE 2306 and initiates transmission of the received user data towards the host 2302. In step 2322, the host 2302 receives the user data carried in the transmission initiated by the UE 2306.

One or more of the various embodiments improve the performance of OTT services provided to the UE 2306 using the OTT connection 2350, in which the wireless connection 2370 forms the last segment. More precisely, the teachings of these embodiments may enable support for any symbol pattern and any value of SINR report per slot efficiently, avoiding repetitions of the reports. In some examples, the O-DU can know how many SINR reports to be used from C-plane message or M-plane configuration. The O-DU can allocate properly the resources to process SINR values and the related processing, without the need to overbook the resources.

In an example scenario, factory status information may be collected and analyzed by the host 2302. As another example, the host 2302 may process audio and video data which may have been retrieved from a UE for use in creating maps. As another example, the host 2302 may collect and analyze real-time data to assist in controlling vehicle congestion (e.g., controlling traffic lights). As another example, the host 2302 may store surveillance video uploaded by a UE. As another example, the host 2302 may store or control access to media content such as video, audio, VR or AR which it can broadcast, multicast or unicast to UEs. As other examples, the host 2302 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 2350 between the host 2302 and UE 2306, in response to variations in the measurement results. The measurement procedure and/or the network functionality for reconfiguring the OTT connection may be implemented in software and hardware of the host 2302 and/or UE 2306. In some embodiments, sensors (not shown) may be deployed in or in association with other devices through which the OTT connection 2350 passes; the sensors may participate in the measurement procedure by supplying values of the monitored quantities exemplified above, or supplying values of other physical quantities from which software may compute or estimate the monitored quantities. The reconfiguring of the OTT connection 2350 may include message format, retransmission settings, preferred routing etc.; the reconfiguring need not directly alter the operation of the network node 2304. Such procedures and functionalities may be known and practiced in the art. In certain embodiments, measurements may involve proprietary UE signaling that facilitates measurements of throughput, propagation times, latency and the like, by the host 2302. The measurements may be implemented in that software causes messages to be transmitted, in particular empty or 'dummy' messages, using the OTT connection 2350 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method of operating a network node in a communications network, the network node configured to provide a radio unit, RU, the method comprising:
determining (1240) a symbol pattern that the RU is capable of using to transmit a signal-to-interference-plus-noise, SINR, report to a distributed unit, DU;
transmitting (1250) an indication to the DU of the symbol pattern that the RU is capable of using to transmit the SINR report to the DU; and
transmitting (1260) the SINR report to the DU using the symbol pattern.

2. The method of Claim 1, wherein determining the symbol pattern that the RU is capable of using to transmit the SINR report to the DU comprises determining the symbol pattern to be used for transmitting the SINR report to the DU, and
wherein transmitting the indication to the DU of the symbol pattern that the RU is capable of using to transmit the SINR report to the DU comprises transmitting an indication to the DU of the symbol pattern to be used for transmitting the SINR report to the DU.

3. The method of Claim 2, wherein the SINR report is a first SINR report of a plurality of SINR reports,
wherein determining the symbol pattern to be used for transmitting the SINR report to the DU comprises determining the symbol pattern to be used for transmitting the plurality of SINR reports to the DU, and
wherein transmitting the indication to the DU of the symbol pattern to be used for transmitting the SINR report comprises transmitting the indication to the DU of the symbol pattern to be used for transmitting the plurality of SINR reports to the DU.

4. The method of Claim 3, wherein the SINR report is a first SINR of the plurality of SINR reports,
wherein transmitting the SINR report to the DU using the symbol pattern comprises:
transmitting the first SINR report of the plurality of SINR reports within a first number of symbols associated with the symbol pattern; and
transmitting a second SINR report of the plurality of SINR reports within a second number of symbols associated with the symbol pattern.

5. The method of Claim 4, wherein the first number of symbols associated with the symbol pattern is different than the second number of symbols associated with the symbol pattern.

6. The method of any of Claims 2-5, wherein transmitting the indication to the DU of the symbol pattern to be used for transmitting the SINR report to the DU comprises transmitting a Section Type 9, ST9, message via a control plane, C-plane, to the DU, the ST9 message including the indication of the symbol pattern to be used for transmitting the SINR report to the DU.

7. The method of any of Claims 1-6, wherein transmitting the SINR report to the DU comprises transmitting SINR data within a slot, and
wherein the indication of the symbol pattern comprises an indication of a symbol mask that indicates a position of the SINR report within the slot.

8. The method of any of Claims 1-7, wherein the communications network comprises an open radio access network, O-RAN,
wherein the RU comprises an O-RAN RU, O-RU, and
wherein the DU comprises an O-RAN DU, O-DU.

9. A method of operating a network node in a communications network, the network node configured to provide a distributed unit, DU, the method comprising:
receiving (1540) an indication from a radio unit, RU, of a symbol pattern that the RU is capable of using to transmit a signal-to-interference-plus-noise, SINR, report to the DU; and
receiving (1550) the SINR report from the RU using the symbol pattern.

10. The method of Claim 9, wherein receiving the indication from the RU of the symbol pattern that the RU is capable of using to transmit the SINR report to the DU comprises receiving an indication from the RU that the symbol pattern will be used for transmitting the SINR report to the DU.

11. The method of Claim 10, wherein the SINR report is a first SINR report of a plurality of SINR reports, and
wherein receiving the indication from the RU that the symbol pattern will be used for transmitting the SINR report comprises receiving the indication from the DU that the symbol pattern will be used for transmitting the plurality of SINR reports to the DU.

12. The method of Claim 11, wherein the SINR report is a first SINR of the plurality of SINR reports,
wherein receiving the SINR report from the RU using the symbol pattern comprises:
receiving the first SINR report of the plurality of SINR reports within a first number of symbols associated with the symbol pattern; and
receiving a second SINR report of the plurality of SINR reports within a second number of symbols associated with the symbol pattern.

13. The method of Claim 12, wherein the first number of symbols associated with the symbol pattern is different than the second number of symbols associated with the symbol pattern.

14. The method of any of Claims 10-13, wherein receiving the indication from the RU that the symbol pattern will be used for transmitting the SINR report to the DU comprises receiving a Section Type 9, ST9, message via a control plane, C-plane, from the RU, the ST9 message including the indication that the symbol pattern will be used for transmitting the SINR report to the DU.

15. The method of any of Claims 9-14, wherein receiving the SINR report from the RU comprises receiving SINR data within a slot, and
wherein the indication of the symbol pattern comprises an indication of a symbol mask that indicates a position of the SINR report within the slot.

16. The method of any of Claims 10-15, further comprising:
prior to receiving the indication from the RU of the symbol pattern that the RU will be using to transmit the SINR report to the DU, receiving (1610) an indication from the RU, via a management plane, M-plane, of a plurality of symbol patterns that the RU is capable of using to transmit the SINR report to the DU.

17. The method of any of Claims 9-16, wherein the communications network comprises an open radio access network, O-RAN,
wherein the RU comprises an O-RAN RU, O-RU, and
wherein the DU comprises an O-RAN DU, O-DU.

18. A network node (2000) in a communications network, the network node adapted to perform the method of any of the claims 1-17.

19. A computer program comprising program code to be executed by processing circuitry (2002) of a network node (2000) in a communications network, whereby execution of the program code causes the network node to perform the method of any of the claims 1-17.

## Patentansprüche

1. Verfahren zum Betreiben eines Netzwerkknotens in einem Kommunikationsnetzwerk, wobei der Netzwerkknoten dazu ausgelegt ist, eine Funkeinheit, RU, bereitzustellen, wobei das Verfahren Folgendes umfasst:
Bestimmen (1240) eines Symbolmusters, das die RU zum Senden eines Signal-zu-Interferenz-plus-Rausch-Berichts, SINR-Berichts, an eine verteilte Einheit, DU, verwenden kann;
Senden (1250) einer Anzeige des Symbolmusters, das die RU zum Senden des SINR-Berichts an die DU verwenden kann, an die DU; und
Senden (1260) des SINR-Berichts unter Verwendung des Symbolmusters an die DU.

2. Verfahren nach Anspruch 1, wobei das Bestimmen des Symbolmusters, das die RU zum Senden des SINR-Berichts an die DU verwenden kann, Bestimmen des Symbolmusters umfasst, das zum Senden des SINR-Berichts an die DU verwendet werden soll, und
wobei das Senden der Anzeige des Symbolmusters, das die RU zum Senden des SINR-Berichts an die DU verwenden kann, an die DU Senden einer Anzeige des Symbolmusters, das zum Senden des SINR-Berichts an die DU verwendet werden soll, an die DU umfasst.

3. Verfahren nach Anspruch 2, wobei der SINR-Bericht ein erster SINR-Bericht einer Mehrzahl von SINR-Berichten ist,
wobei das Bestimmen des Symbolmusters, das zum Senden des SINR-Berichts an die DU verwendet werden soll, Bestimmen des Symbolmusters umfasst, das zum Senden der Mehrzahl von SINR-Berichten an die DU verwendet werden soll, und
wobei das Senden der Anzeige des Symbolmusters, das zum Senden des SINR-Berichts verwenden werden soll, an die DU Senden der Anzeige des Symbolmusters, das zum Senden der Mehrzahl von SINR-Berichten an die DU verwendet werden soll, an die DU umfasst.

4. Verfahren nach Anspruch 3, wobei der SINR-Bericht ein erster SINR-Bericht der Mehrzahl von SINR-Berichten ist,
wobei das Senden des SINR-Berichts unter Verwendung des Symbolmusters an die DU Folgendes umfasst:
Senden des ersten SINR-Berichts der Mehrzahl von SINR-Berichten innerhalb einer ersten Anzahl von Symbolen, die mit dem Symbolmuster assoziiert sind;
Senden des zweiten SINR-Berichts der Mehrzahl von SINR-Berichten innerhalb einer zweiten Anzahl von Symbolen, die mit dem Symbolmuster assoziiert sind.

5. Verfahren nach Anspruch 4, wobei sich die erste Anzahl von Symbolen, die mit dem Symbolmuster assoziiert sind, von der zweiten Anzahl von Symbolen, die mit dem Symbolmuster assoziiert sind, unterscheidet.

6. Verfahren nach einem der Ansprüche 2-5, wobei das Senden der Anzeige des Symbolmusters, das zum Senden des SINR-Berichts an die DU verwendet werden soll, an die DU Senden einer Section Type 9-Nachricht, ST9-Nachricht, über eine Steuerebene, C-Ebene, an die DU umfasst, wobei die ST9-Nachricht die Anzeige des Symbolmusters umfasst, das zum Senden des SINR-Berichts an die DU verwendet werden soll.

7. Verfahren nach einem der Ansprüche 1-6, wobei das Senden des SINR-Berichts an die DU Senden von SINR-Daten innerhalb eines Schlitzes umfasst, und
wobei die Anzeige des Symbolmusters eine Anzeige einer Symbolmaske umfasst, die eine Position des SINR-Berichts innerhalb des Schlitzes anzeigt.

8. Verfahren nach einem der Ansprüche 1-7, wobei das Kommunikationsnetzwerk ein offenes Funkzugangsnetzwerk, O-RAN, umfasst,
wobei die RU eine O-RAN-RU, O-RU, umfasst und
wobei die DU eine O-RAN-DU, O-DU, umfasst.

9. Verfahren zum Betreiben eines Netzwerkknotens in einem Kommunikationsnetzwerk, wobei der Netzwerkknoten dazu ausgelegt ist, eine verteilte Einheit, DU, bereitzustellen, wobei das Verfahren Folgendes umfasst:
Empfangen (1540) einer Anzeige eines Symbolmusters von einer Funkeinheit, RU, das die RU zum Senden eines Signal-zu-Interferenz-plus-Rausch-Berichts, SINR-Berichts, an die DU verwenden kann; und
Empfangen (1550) des SINR-Berichts von der RU unter Verwendung des Symbolmusters.

10. Verfahren nach Anspruch 9, wobei das Empfangen der Anzeige des Symbolmusters, das die RU zum Senden des SINR-Berichts an die DU verwenden kann, von der RU Empfangen einer Anzeige des Symbolmusters, das zum Senden des SINR-Berichts an die DU verwendet werden wird, von der RU umfasst.

11. Verfahren nach Anspruch 10, wobei der SINR-Bericht ein erster SINR-Bericht einer Mehrzahl von SINR-Berichten ist, und
wobei das Empfangen der Anzeige von der RU, dass das Symbolmuster zum Senden des SINR-Berichts verwendet werden wird, Empfangen der Anzeige von der DU umfasst, dass das Symbolmuster zum Senden der Mehrzahl von SINR-Berichten an die DU verwendet werden wird.

12. Verfahren nach Anspruch 11, wobei der SINR-Bericht ein erster SINR-Bericht der Mehrzahl von SINR-Berichten ist,
wobei das Empfangen des SINR-Berichts von der RU unter Verwendung des Symbolmusters Folgendes umfasst:
Empfangen des ersten SINR-Berichts der Mehrzahl von SINR-Berichten innerhalb einer ersten Anzahl von Symbolen, die mit dem Symbolmuster assoziiert sind;
Empfangen des zweiten SINR-Berichts der Mehrzahl von SINR-Berichten innerhalb einer zweiten Anzahl von Symbolen, die mit dem Symbolmuster assoziiert sind.

13. Verfahren nach Anspruch 12, wobei sich die erste Anzahl von Symbolen, die mit dem Symbolmuster assoziiert sind, von der zweiten Anzahl von Symbolen, die mit dem Symbolmuster assoziiert sind, unterscheidet.

14. Verfahren nach einem der Ansprüche 10-13, wobei das Empfangen der Anzeige von der RU, dass das Symbolmuster zum Senden des SINR-Berichts an die DU verwendet werden wird, Empfangen einer Section Type 9-Nachricht, ST9-Nachricht, über eine Steuerebene, C-Ebene, von der RU umfasst, wobei die ST9-Nachricht die Anzeige umfasst, dass das Symbolmuster zum Senden des SINR-Berichts an die DU verwendet werden wird.

15. Verfahren nach einem der Ansprüche 9-14, wobei das Empfangen des SINR-Berichts von der RU Empfangen von SINR-Daten innerhalb eines Schlitzes umfasst, und
wobei die Anzeige des Symbolmusters eine Anzeige einer Symbolmaske umfasst, die eine Position des SINR-Berichts innerhalb des Schlitzes anzeigt.

16. Verfahren nach einem der Ansprüche 10-15, ferner umfassend:
vor dem Empfangen der Anzeige des Symbolmusters, das die RU zum Senden des SINR-Berichts an die DU verwenden wird, von der RU Empfangen (1610) einer Anzeige einer Mehrzahl von Symbolmustern, die die RU zum Senden des SINR-Berichts an die DU verwenden kann, von der RU über eine Verwaltungsebene, M-Ebene, umfasst.

17. Verfahren nach einem der Ansprüche 9-16, wobei das Kommunikationsnetzwerk ein offenes Funkzugangsnetzwerk, O-RAN, umfasst,
wobei die RU eine O-RAN-RU, O-RU, umfasst, und
wobei die DU eine O-RAN-DU, O-DU, umfasst.

18. Netzwerkknoten (2000) in einem Kommunikationsnetzwerk, wobei der Netzwerkknoten zum Durchführen des Verfahrens nach einem der Ansprüche 1-17 ausgelegt ist.

19. Computerprogramm, umfassend Programmcode, der von Verarbeitungsschaltungsanordnung (2002) eines Netzwerkknotens (2000) in einem Kommunikationsnetzwerk ausgeführt werden soll, wobei die Ausführung des Programmcodes den Netzwerkknoten zum Durchführen eines Verfahrens nach einem der Ansprüche oder 1-17 veranlasst.

## Revendications

1. Procédé de fonctionnement d'un nœud de réseau dans un réseau de communication, le nœud de réseau étant configuré pour fournir une unité radio, RU, le procédé comprenant :
la détermination (1240) d'un motif de symbole que la RU est capable d'utiliser pour transmettre un rapport de rapport de signal sur interférence plus bruit, SINR, à une unité distribuée, DU ;
la transmission (1250) d'une indication à la DU du motif de symbole que la RU est capable d'utiliser pour transmettre le rapport de SINR à la DU ; et
la transmission (1260) du rapport de SINR à la DU à l'aide du motif de symbole.

2. Procédé selon la revendication 1, dans lequel la détermination du motif de symbole que la RU est capable d'utiliser pour transmettre le rapport de SINR à la DU comprend la détermination du motif de symbole à utiliser pour transmettre le rapport de SINR à la DU, et
dans lequel la transmission de l'indication à la DU du motif de symbole que la RU est capable d'utiliser pour transmettre le rapport de SINR à la DU comprend la transmission d'une indication à la DU du motif de symbole à utiliser pour transmettre le rapport de SINR à la DU.

3. Procédé selon la revendication 2, dans lequel le rapport de SINR est un premier rapport de SINR d'une pluralité de rapports de SINR,
dans lequel la détermination du motif de symbole à utiliser pour transmettre le rapport de SINR à la DU comprend la détermination du motif de symbole à utiliser pour transmettre la pluralité de rapports de SINR à la DU, et
dans lequel la transmission de l'indication à la DU du motif de symbole à utiliser pour transmettre le rapport de SINR comprend la transmission de l'indication à la DU du motif de symbole à utiliser pour transmettre la pluralité de rapports de SINR à la DU.

4. Procédé selon la revendication 3, dans lequel le rapport de SINR est un premier rapport de SINR de la pluralité de rapports de SINR,
dans lequel la transmission du rapport de SINR à la DU à l'aide du motif de symbole comprend :
la transmission du premier rapport de SINR de la pluralité de rapports de SINR à l'intérieur d'un premier nombre de symboles associés au motif de symbole ; et
la transmission d'un deuxième rapport de SINR de la pluralité de rapports de SINR à l'intérieur d'un deuxième nombre de symboles associés au motif de symbole.

5. Procédé selon la revendication 4, dans lequel le premier nombre de symboles associés au motif de symbole est différent du deuxième nombre de symboles associés au motif de symbole.

6. Procédé selon l'une quelconque des revendications 2 à 5, dans lequel la transmission de l'indication à la DU du motif de symbole à utiliser pour transmettre le rapport de SINR à la DU comprend la transmission d'un message Section Type 9, ST9, via un plan de commande, C-plane, à la DU, le message ST9 incluant l'indication du motif de symbole à utiliser pour transmettre le rapport de SINR à la DU.

7. Procédé selon l'une quelconque des revendications 1 à 6, dans lequel la transmission du rapport de SINR à la DU comprend la transmission de données de SINR à l'intérieur d'un créneau, et
dans lequel l'indication du motif de symbole comprend une indication d'un masque de symbole qui indique une position du rapport de SINR à l'intérieur du créneau.

8. Procédé selon l'une quelconque des revendications 1 à 7, dans lequel le réseau de communication comprend un réseau d'accès radio ouvert, O-RAN,
dans lequel la RU comprend une RU O-RAN, O-RU, et
dans lequel la DU comprend une DU O-RAN, O-DU.

9. Procédé de fonctionnement d'un nœud de réseau dans un réseau de communication, le nœud de réseau étant configuré pour fournir une unité distribuée, DU, le procédé comprenant :
la réception (1540) d'une indication, depuis une unité radio, RU, d'un motif de symbole que la RU est capable d'utiliser pour transmettre un rapport de rapport de signal sur interférence plus bruit, SINR, à la DU ; et
la réception (1550) du rapport de SINR depuis la RU à l'aide du motif de symbole.

10. Procédé selon la revendication 9, dans lequel la réception de l'indication depuis la RU du motif de symbole que la RU est capable d'utiliser pour transmettre le rapport de SINR à la DU comprend la réception d'une indication depuis la RU que le motif de symbole sera utilisé pour transmettre le rapport de SINR à la DU.

11. Procédé selon la revendication 10, dans lequel le rapport de SINR est un premier rapport de SINR d'une pluralité de rapports de SINR, et
dans lequel la réception de l'indication depuis la RU que le motif de symbole sera utilisé pour transmettre le rapport de SINR comprend la réception de l'indication depuis la DU que le motif de symbole sera utilisé pour transmettre la pluralité de rapports SINR à la DU.

12. Procédé selon la revendication 11, dans lequel le rapport de SINR est un premier rapport de SINR de la pluralité de rapports de SINR,
dans lequel la réception du rapport de SINR depuis la RU à l'aide du motif de symbole comprend :
la réception du premier rapport de SINR de la pluralité de rapports de SINR à l'intérieur d'un premier nombre de symboles associés au motif de symbole ; et
la réception d'un deuxième rapport de SINR de la pluralité de rapports de SINR à l'intérieur d'un deuxième nombre de symboles associés au motif de symbole.

13. Procédé selon la revendication 12, dans lequel le premier nombre de symboles associés au motif de symbole est différent du deuxième nombre de symboles associés au motif de symbole.

14. Procédé selon l'une quelconque des revendications 10 à 13, dans lequel la réception de l'indication depuis la RU que le motif de symbole sera utilisé pour transmettre le rapport de SINR à la DU comprend la réception d'un message Section Type 9, ST9, via un plan de commande, C-plane, depuis la RU, le message ST9 incluant l'indication que le motif de symbole sera utilisé pour transmettre le rapport de SINR à la DU.

15. Procédé selon l'une quelconque des revendications 9 à 14, dans lequel la réception du rapport de SINR depuis la RU comprend la réception de données de SINR à l'intérieur d'un créneau, et
dans lequel l'indication du motif de symbole comprend une indication d'un masque de symbole qui indique une position du rapport de SINR à l'intérieur du créneau.

16. Procédé selon l'une quelconque des revendications 10 à 15, comprenant en outre :
avant la réception de l'indication depuis la RU du motif de symbole que la RU utilisera pour transmettre le rapport de SINR à la DU, la réception (1610) d'une indication depuis la RU, via un plan de gestion, M-plane, d'une pluralité de motifs de symbole que la RU est capable d'utiliser pour transmettre le rapport de SINR à la DU.

17. Procédé selon l'une quelconque des revendications 9 à 16, dans lequel le réseau de communication comprend un réseau d'accès radio ouvert, O-RAN,
dans lequel la RU comprend une RU O-RAN, O-RU, et
dans lequel la DU comprend une DU O-RAN, O-DU.

18. Nœud de réseau (2000) dans un réseau de communication, le nœud de réseau étant adapté pour réaliser le procédé selon l'une quelconque des revendications 1 à 17.

19. Programme informatique comprenant un code de programme à exécuter par une circuiterie de traitement (2002) d'un nœud de réseau (2000) dans un réseau de communication, selon lequel une exécution du code de programme amène le nœud de réseau à réaliser le procédé selon l'une quelconque des revendications 1 à 17.
